(19) Europäisches Patentamt / European Patent Office / Office européen des brevets

(11) **EP 3 386 165 B1**

(12) **EUROPEAN PATENT SPECIFICATION**

(45) Date of publication and mention
of the grant of the patent:
**01.09.2021 Bulletin 2021/35**

(51) Int Cl.:
*H04W 4/50* (2018.01)          *G06F 21/44* (2013.01)
*H04L 29/06* (2006.01)          *H04Q 3/00* (2006.01)

(21) Application number: **18166156.2**

(22) Date of filing: **06.04.2018**

(54) **METHOD AND DEVICE FOR IMPLEMENTING AND MANAGING SECURE COMMUNICATIONS, PROVISIONING SYSTEMS, AUTHENTICATION AND SIGNING SYSTEMS**

VERFAHREN UND APPARATUS ZUR IMPLEMENTIERUNG UND MANAGEMENT EINER SICHEREN KOMMUNIKATION, EINES PROVISIONIERUNGSSYSTEMS, UND EINES AUTHENTIFIZIERUNGS- UND SIGNIERUNGSSYSTEMS

PROCÉDÉ ET DISPOSITIF DE IMPLEMENTATION ET DE GESTION DE COMMUNICATION SECURISEES, SYSTEME DE PROVISIONING, ET SYSTEME D'AUTHENTICATION ET SIGNATURES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.04.2017 IT 201700038031**

(43) Date of publication of application:
**10.10.2018 Bulletin 2018/41**

(73) Proprietor: **Apeiron S.R.L.**
**35030 Rubano (PD) (IT)**

(72) Inventor: **PENTIMALLI, Pierluigi**
**35030 Selvazzano Dentro (PD) (IT)**

(74) Representative: **Fabiano, Piero et al**
**Fabiano, Franke & MGT Sagl**
**Piazzetta San Carlo, 2**
**6900 Lugano (CH)**

(56) References cited:
WO-A1-2016/038607          US-A1- 2006 053 276
US-A1- 2012 046 025          US-A1- 2016 261 997

## Description

## Technical field

The present invention concerns a method and a device for implementing and managing secure communications, such as communications for the authentication of a user, for the authorization and access to remote resources, for the advanced digital and electronic signature, for the exchange of cryptographic keys, certificates or the like and the creation of secure communication sessions.

Such a method and device may be used for example to transmit one- or multi-factor identification and/or authentication and/or authorization codes, or to set up secure connections with remote systems through simultaneous or asynchronous negotiation (secure handshaking) over one or more communication channels, to implement both provisioning processes of application and devices, in particular OOB (Out of Band) provisioning, more advanced than the current ones to the further benefit of the users, and local and remote access processes to access computer systems, as well as to transmit and receive cryptographic keys, digital certificates and pre-shared secrets in general, to sign contracts and/or digitally sign a document through advanced electronic signature and digital signature also remotely, to confirm a banking operation (for example, an order or the modification of personal data) or, even more generally, to implement and manage secure transmitting and receiving processes to transmit and receive messages, data and information, commands and notifications.

## Prior art

Modern information and telecommunication systems are converging towards increasingly integrated portable devices able to play both the role of telephone and the role of computer or else, more generally, of computer supporting multiple professional or recreational daily activities.

For example, smartphones today represent the portable computer tool par excellence in all professional and personal fields. Thanks to the fact that any type and sort of applications can be installed on these devices, smartphones have become the main instrument for people to communicate and interact with other people, with company and third-party information systems.

However, at the same time, this spread is also a weakness of these devices and their operating systems, which become the target of cyber- attacks and all sorts and kinds of hacking at all levels. There are countless reports of security bugs in the operating systems of mobile devices, as well as those inside applications (also called apps) or even the stores themselves through which users search and download apps. In this context, operating systems of smartphones are not able to ensure the security level of dedicated solutions developed on specific hardware and systems, as they were conceived and designed with the aim of making, first of all, the user experience as easy and simple as possible, by creating a commercial platform to offer a range of services, profiling the customer in various ways and for various purposes.

This allowed certain flexibility in releasing functions made available by these operating systems to applications that, in turn, make the operating environment prone to the attack of malware, trojans and/or bots of all kinds, also aided by the fact that the user can install anything by a simple click. Finally, in some cases, the users themselves change the operating status of their smartphone in order to install software of various types and kinds (see, for example, the jailbreak on iOS and other rootkit techniques on Android).

Therefore, applications requiring strong user authentication should use various sorts and types of protection mechanisms when they cannot have an external, physical and dedicated device able to perform authentication and, more generally, security operations in a manner completely isolated from the device in which they are installed. These devices include various types of modules among which the HSMs (Hardware Security Modules) and SEs (Secure Elements). These modules are available in different versions and types integrated in portable devices typically in the form of USB tokens, ISO 7816 smartcards, security microSDs, Bluetooth security dongle or also integrated inside electronic cards and dedicated devices (server-type HSM devices, PCIe HSM cards, etc.). In some cases they are also directly inserted into computer apparatuses such as computers, desktops, notebooks and some types of smartphones. In this regard, consider the ISO 7816 cards used in the bank payment circuits (for ATMs and credit cards) and the well-known EMV standard, or the conditional access systems (Conditional Access Module, CAM) for the use of multimedia content subject to copyright transmitted via streaming or satellite, or else the telephone SIMs that allow the access to the mobile network through the phone. In all these systems, user authentication takes place thanks to possession of the access hardware token and, as is the case with credit, debit or telephone cards, also through knowledge of the unlock PIN (Personal Identification Number), which is a substantial element because it is something that only the user knows. The presence of a PIN involves, in turn, the need for recovery procedures using other codes (e.g. PUK). This PIN may in some cases be replaced by the fingerprint (i.e. using biometric data of the user) or other methods of biometric recognition (such as facial recognition), if the device allows it.

The presence of a hardware support shields the fundamental secrets used and/or transmitted in the provisioning and/or activating steps of the device itself, in those of secure connection to remote systems and of authentication as well as in the subsequent steps, such as, for example, those of one- or multi-factor authentication or cryptographic and digital signature where the user, after having gained access to the protected resource, by decrypting the latter is able to access its content, or where he can either sign a contract or authorize a given operation by affixing a signature or even securely communicate thanks to the encryption in real time of the communication channel. However, this level of protection requires the user to use not only his own computer equipment, but also an additional external hardware element. This element must also be delivered to the user and, if the latter uses it in conjunction with the device itself, he must install and configure it or, more generally, connect it when necessary. It is often necessary to replace it periodically, for example due to the presence of a battery.

It is therefore clear the advantage of using software-based solutions by resorting to the so-called SSMs (Software Security Modules) able to be supplied directly with the applications whether the latter are for laptops and notebooks, desktops or servers, or even applications for mobile phones or smartphones. However, since these are purely software security measures, they cannot be directly compared with similar hardware ones. In this case, the protection level of cryptographic secrets depends on the abilities of the host system, i.e. on the hardware characteristics of the computer platform (typically a computer or smartphone) and operating system. Due to the extreme ease of distribution and the very low operating cost of these solutions, HSM modules and Secure Elements are therefore almost exclusively used for applications in governmental sphere and in very restricted sectors such as that of payments in banking (for example through OTP tokens or debit and credit cards), in the telephony sector or that of television and satellite pay-TV. In the banking sector, as in the corporate sector, more and more smartphone applications embedding various SSM solutions are being used. These applications generate Soft Tokens OTP of various types and kinds, depending on the algorithms used, in place of the similar ones generated by hardware tokens.

If SSM security modules that, by their nature, operate within inherently insecure systems are used, it is not possible to store Personalized Security Credentials and/or cryptographic keys resulting from the device provisioning as is the case with hardware tokens. Such credentials and/or keys can be stored together with other cryptographic data but only if encrypted and protected by several encryption layers, typically by requiring the user an access PIN known only to him or, in some cases, by replacing such PIN by the fingerprint depending both on the hardware characteristics of the device housing the application and the security processes of the company or bank. This is mandatory, for example, in the banking sector as stated in the PSD2 standard.

Both in case of hardware authentication devices (tokens) and in case of secure authentication applications installed in a pre-existing computer device (soft tokens), it is necessary to one-to-one combine the identity of the user with the identity of the device and/or application and the latter with the server systems of the bank, company or governmental body requiring its use. Once verified the user identity (during the enrolment step), this association or matching (also called pairing) takes place in the context of the so-called provisioning procedures.

When the delivery of the token or soft token takes place physically (for example, at a bank branch or in a company's office) the user, and therefore his identity, is identified face to face and it is possible to release the physical device or an one-time activation code that the user can subsequently use to independently activate the token or soft token. Some examples are the activation of the access to the web banking portal when new contract and/or web banking service are signed or the procedure for activating credit cards by telephone, such procedure operating in any case after the enhanced identification physically carried out by the bank during the request step. Anyway, in case of physical verification of the identity, also the aforementioned provisioning generally takes place concurrently or can at most provide a last step of remote activation either by means of the input of multiple authentication codes in a given system or by means of an operator verifying some of the customer's personal data released during the stipulation step. More generally, in these cases the "enrolment & provisioning" procedures balance the physical verification of the user identity with the type of service accessed by him, taking into account the potential risk of fraud.

As evident, if the token or the soft token is remotely delivered, as a result the potential risk of fraud is increased. In these contexts, to reduce the risk that the provisioning step could expose the system to cyber risks (for example, by allowing the interposition of an attacker conducting a MITM, Man In The Middle, attack), once the identity of the user has been confirmed, several activation codes are sent through several heterogeneous and preferably independent channels. For example by sending to the user a code by traditional mail, another by email and yet another by SMS. The user, by typing one or more of these codes in the token or in the soft token (typically in the mobile security app), by clicking on links received via email, etc., starts the step of secure provisioning. In some cases, provisioning is done under the supervision of a company or bank operator by phone or video call.

The purpose of these codes is to create, inside the token or soft token, a Pre-Shared Key (PSK) that is used in its turn to start a procedure of secure connection with the server systems. As known to the person skilled in the art, this procedure is carried out by resorting to various types of algorithms for the encryption and authentication of exchanged messages (MAC), these algorithms implementing, all together, the various procedures known in the literature as the secure channel handshaking. In order to carry out the secure provisioning, this step is essential and takes place before activating the token and/or soft token itself.

After provisioning, the user chooses a unique and personal PIN through which the various inner security and cryptographic engines of the token or soft token are initialized. Such a PIN is essential to protect cryptographic secrets exchanged between the SSM or SE and back-end server systems during the provisioning step. Only by subsequently inputting this PIN, the token or the soft token, in turn, can derive an OTP code that can be used either for the various authentication, access, signature, etc. procedures or to access the protected cryptographic data by using one or more symmetrical or asymmetrical keys (for example, a private key) to perform its task.

In the context described above, multi-factor authentication provides that not only the PIN but also additional elements must be provided to the token or soft token in order to derive the above mentioned secrets. Typically, one of these elements is a unique identifier of the hardware in which the token or soft token is running (for example, the serial number of the cryptographic chip constituting the SE or a cryptographic seed inserted into the keychain/keystore at the highest possible level of protection in case of smartphones, which, together with other data, in turn constitutes the fingerprint of the device). The combination of several factors, including the PIN, allows the access on the enabled device to the secrets required to derive OTP codes, to use cryptographic keys and access credentials (Personalized Security Credentials) according to various known techniques. These factors can also be fully or partially transmitted by several systems and not only operate locally in the token or soft token, creating various mechanisms known to those skilled in the art as implicit, explicit OTPs, challenge/response mechanisms, various types of digital signature through OTP, etc. However, when two independent factors are needed to perform a given function, the system operates in two-factor mode. If the given operation concerns the authentication of a user to a given system, this is referred to as two-factor authentication (2FA). Obviously, the factors can be even more than two and, in some cases, they can be locally generated by a device and, in other cases, they can also be transmitted/received on more than one channel, simultaneously or asynchronously, in OOB mode even by more than one device.

To understand how multi-factor authentication takes place, consider, for example, a user who wants to be authenticated through his mobile device (for example, a smartphone) to the back-end server of a bank in order to give an order. In this case, the bank provides the user with an application equipped with a security system and univocally associated with his identity verified during a specific "enrolment & provisioning" procedure. The user, by entering the PIN only known by him, starts the authorization procedure towards the bank servers, typically by generating one or more specific OTP (One Time Password) codes concomitant with the current operation (in the case of the example, the OTP codes not only depend on the device and time when the operation is carried out, but also on the content of the operation itself). Such codes, together with other data, are in some cases exchanged through several heterogeneous and independent communication channels, so that it is presumably more difficult for a possible attacker to acquire these information simultaneously and within certain (very reduced) time span, in order to break into the system.

Codes derived by the multi-factor procedure generally have limited time duration, are not located in the device and, above all, change at each access and operation performed through this functional model thanks to a subsequent synchronization between the back-end server systems and the client systems used.

This authentication mechanism is used for example in applications made available by banks for their customers to remotely access their bank account, or through authentication platforms such as the Ezio solution of Gemalto Company, or Digipass and Vacman of Vasco Company and so on. Similar examples are Google Authenticator or the system used by Microsoft to manage access to its online services. There are a lot of solutions, suppliers and cases of use of this method of authentication, sometimes implemented by sending, both simultaneously and asynchronously, the authentication factors over multiple channels independent and/or heterogeneous with respect to one another. Also, there are multiple public standards such as HOTP (RFC 4226), TOTP (RFC 6238) and OCRA (RFC 6287) or even authentication platforms such as the one promoted by FIDO Alliance.

In some cases, these procedures are carried out by using multiple and differentiated encryption channels, with data transported over the IP Protocol (Internet Protocol). In other cases, one of the factors is sent as a numerical or alphanumeric code via SMS to the mobile phone number provided by the customer. In other cases, an email is sent containing a code to be copied, a link to be clicked or a QRCode to be framed by means of one's own smartphone by using the secure authentication app (soft token) since provisioning. In still further cases, one of the codes is played through a text-to-speech mechanism in a phone or VoIP call.

In view of the above and depending on the cases, the user is required to provide an identification PIN, code or personal password that in turn allows OTP codes to be generated or that is directly used in the identification and authentication process resorting to additional cryptographic solutions. In some cases the PIN is replaced by the fingerprint, limited to the abilities of the system hosting the security application and the security criteria of the company or bank or other authority involved, including government bodies.

It is well known that OTP codes not only can be generated inside specific applications but can also be generated by standalone and secure portable devices, such as for example OTP provided by some banks to their customers, or else can be distributed in paper form (matrix card), etc. When they are generated in software applications running on a computer device, appropriate security countermeasures must be taken to detect the presence of operating conditions not suitable for the device (anti-rootkit, anti-debugger, keylogger detection, malware detection, anti-code injection and much more), in turn guaranteeing that various planned operations are carried out in secure and protected manner with respect to an attacker, by resorting to whitebox cryptography techniques or algorithms for deriving the cryptographic keys based also on the user's PIN, such as the PBKDF2 function, which is part of the RSA PKCS #5 standard (RFC 2898).

What above can be applied in various operational areas such as, for example, access upon authentication to remote systems, or authorization of banking orders, remote signing of contracts by using advanced electronic signature, remote qualified signature and remote digital signature solutions, procedures for secure exchange and validation of cryptographic keys and digital certificates, procedures for creating secure communication sessions over insecure channels (secure communication handshaking) and systems for secure transmission and reception of messages, data and information.

As mentioned above, especially when provisioning takes place remotely, first of all a secure end-to-end communication channel must be set up between the token or soft token and the back-end server systems. To achieve this, one or more factors are generally sent through heterogeneous channels (traditional mail, email, SMS, etc.) involving the user in the security process. If the user already has a secure device (e.g. a token, a matrixcard, etc.), one of the factors used to activate the new token or soft token is retrieved from the provisioning system he already owns. Also in this case there is the OOB component and the user is always personally involved.

It is clear that if the user has to read one or more codes from a given source outside the device to be activated and then has to type them into the system itself (for example, the security application of the bank or company), several problems arise. The first one, experienced by all those people making use of home and web banking systems, consists in the user not carrying the OTP token (the OTP "stick") when he needs it. The second one is that, even if the user receives the code, typically via SMS, he is required to do some extra steps on his smartphone, to store the code and type it again. If the code is also sent via email and other channels, the procedure is even more complicated for the user. This code may be incorrectly typed by the user, or the user may inadvertently store an incorrect code, thereby repeatedly making a mistake when typing it. In addition, the user generally also experiences a change in the context of applications that is not easy, at least not for all users. This applies both during the activation phase, during provisioning, and subsequently if the system provides for the management of the various authentication , authorization, signature, etc. procedures through multi-channel OTP codes, typically OOB having various schemes and methods such as, for example, in Response Only or Challenge/Response modes.

It should also be noted that, by involving the user in the security process, these types of codes must have reduced sizes (typically 5-6 numbers), and therefore the security level guaranteed by the number of possible combinations is lower than solutions in which by contrast the same code may have greater length. This increases the attack surface of systems which ultimately have to check and determine whether a given code is valid or not. Time validation mechanisms based on multiple and variable windows, counters, systems for detecting brute force attacks and so on must be prearranged.

The inherent security of the OBB communication channels used must be additionally considered. Certainly neither the email is a secure channel nor the SMS channel that, although much more secure than an IP network (Internet) thanks to the circuit switching managed by various enabled operators, still suffers from inherent security bugs, known to those skilled in the art, due to SS7 protocol of the GMS network.

In the cases highlighted above, from the user's point of view, the procedure for managing code input is intricate and is not free from errors and security problems deriving therefrom. Any incorrect sequence repeated by inattentive users generally leads to the shutdown either of the application and/or, depending on the cases, of the user's account on the remote system, resulting in a further management burden for helpdesk and backoffice operators.

Anyway, in case of soft tokens, it should be noted that OTP codes not only suffer from security limitations due to their small size (length), but are also exposed to different types of cyber-attacks. In particular, any malware, trojan or other malicious application an attacker may install on the user's device, is able to intercept these codes both during their reception (for example, in case of sending via SMS), and when the user types them in the interface of the application itself. In this regard, reference should be made to the attacks carried out by using the Zeus (Zeus in The Mobile), Eurograbber and Perkele botnets.

It has also been noted that this type of attack is able not only to intercept these codes, but also to alter them and transmit them on remote systems where the attacker can use them unbeknown to the user, impersonating the latter with the authentication server that is not aware of the problem. These security limitations, together with various techniques, also allow attacks of the Man In The Middle (MITM) type to be carried out by third parties who interpose themselves along the communication channel, typically set up through connection over the Internet (as well as other types of geographical or even local networks) and IP protocol, between the application running on the user's smartphone or computer (for example, the browser used for the connection to the remote system or the mobile app of the bank or company) and the authentication servers. The attacks can also formerly occur during the provisioning step yet and not only afterwards or can ultimately be aimed at completely impersonating the user without his knowing.

Finally, for all those systems operating separately and independently from the system they protect (OTP tokens, matrix cards, etc.), the applicant noted that they are implicitly a non-negligible constraint to the security criteria as they constitute, to all intents and purposes, a bearer security: if the device is stolen and, in the case of the matrix card, the latter is copied, the protection level guaranteed by them becomes completely ineffective.

In summary, the known solutions described above imply additional work for the user involved in the security process especially when using one or more OOB channels, and increase the possibility of errors that, ultimately, the back-end security system must in turn anticipate and manage accordingly, thereby weakening the overall security of solutions.

Document US 2006/053276 describes a method conceived to allow a device, typically a computer and/or telephone, to set up a connection by using an OOB channel in order to have authenticated access to a given resource. Said document describes a high-level method, i.e. a method not related to techniques and methods used to carry arbitrary data via communicating means, but only limited to the description of a logical process among the various possible, to confirm to a first party the identity of a second party in a typical company context. In particular, said document specifies that the use of the OOB channel is intended to allow the second subject to prove to the first subject that he or she holds a (symmetrical) cryptographic key and that, thanks to this, the registration protocol of the second subject towards the first subject can be protected. Logical procedures using both one-way and two-way OOB channels are described, but this document does not describe the inherent nature of the channel nor, therefore, does it refer to the possibility of passing any type of data therethrough. Document US 2006/053276 further describes several OOB channels implemented as proximity channels and via direct wired connections, USB tokens, RFID tags, infrared communications and short-range radio systems obtained, however, by using in-band radio channels, i.e. the main ones of the aforementioned devices, to reconstruct a proximity communication logic. More specifically, the US document 2006/053276 refers to out-of-band channels only and exclusively as proximity communicating means and not, more in general, as communication channels additional with respect to a primary in-band channel and usable in any context, i.e. in the proximity context , but also in the context of personal communication networks PAN and systems, local networks LAN, geographical networks WAN as well as globally extending networks such as the Internet, mobile and satellite telephone networks including audio and video broadcasting systems.

Document US 2016/261997 describes a management system for emergency telecommunication networks, the system using the GSM audio telephone channel to transmit identification data and/or basic information that in turn refers to the real data communicated out-of-band over other channels, typically IP data network, such as email, or the like. In such document, the telephone voice channel is the in-band channel, i.e. the main one. The OOB channel is the data channel implemented, for example, via e-mail.

Document US 2012/046025 depicts a system whose purpose is to allow a given mobile terminal unit, typically a smartphone, to be paired to a mobile telephony femtocell and to access thereto. In this document, the OOB channel is typically a Wi-Fi, Bluetooth or UWB (802.15.3) radio channel.

Finally, WO 2016/053276 provides a method for activating and managing the wireless charging of a mobile terminal, typically a smartphone, when it rests on an inductive or capacitive charging station. The method provides that a specific mobile application is downloaded and run in the phone in order to authorize charging. The system communicates via in-band (main) and out-of-band channels. However, the concept of OOB mentioned in this patent application and, more specifically, of in-band and out-of-band channels, is a concept specific to this document. In this document, an in-band channel is a channel through which the smartphone (with the running application) and the charging device (and, through the latter, the remote server) communicate thus transmitting data and signals on the same frequency. OOB means that data and signaling are separate.

## Summary of the Invention

Object of the present invention is to propose a method that allows the expansion of the variety of independent channels used by provisioning procedures, by procedures to secure communication channels (secure handshaking), by procedures of identification, authentication and/or authorization as well as one- or multi- factor signature and by procedures to create and manage communication systems for the secure exchange of messages, data and information, by proposing a new channel currently not used in the known art.

It is another object of the present invention to propose a method that allows the transmission and reception on the new channel of the data used in the provisioning procedures and in those for securing communication channels, as well as of the identification, authentication and/or authorization and signature codes, including cryptographic keys, certificates, pre-shared secrets and cryptographic material in general, data and information composed of an unlimited number of digits or symbols.

A further object of the present invention is to propose a method of the type mentioned above that allows these data, codes and information to be sent in a completely automatic way and independently from the user, thereby preventing possible typing or storage errors as well as errors caused by context switching.

These objects are achieved by a method for transceiving an arbitrary numerical sequence according to claim 1. Further characteristics of the present invention are disclosed in the respective dependent claims.

In a possible embodiment, a method for transceiving an arbitrary numerical sequence is provided, in which the transmission comprises the steps of:

a) decomposing a time-varying analog and/or digital signal into at least one in-phase component and at least one quadrature component,
b) modulating said arbitrary numerical sequence in the form of said time-varying analog and/or digital signal, wherein each element of that arbitrary numerical sequence is determined by the amplitude and phase parameters of said components;
c) recomposing the in-phase and quadrature components of said analog and/or digital signal;
d) transmitting said analog and/or digital signal.

The reception comprises the steps of:

e) receiving said analog and/or digital signal;
f) decomposing said analog and/or digital signal into the in-phase and quadrature components; and
g) identifying each element of said arbitrary numerical sequence determined by the amplitude and phase parameters of said components.

According to an advantageous aspect of the present invention, the analog and/or digital signal is a signal modulated so that it can be carried via communication channels and/or communicating means with limited bandwidth, for example low frequency bandwidth.

Therefore, the problems of the known art are solved by a method according to the invention by introducing a new channel for transmitting and receiving data used in provisioning procedures, in those of securing communication channels, as well as data related to one- or multi- factor identification, authentication and/or authorization, secure access and signature procedures, and procedures for creating and managing secure communication systems for messages, data and information. The method can apply to any type of algorithms and procedures for provisioning and securing communication channels, for the secure communication, one- or multifactor identification and/or authentication, and signature. Therefore, it should not be considered as limited to algorithms with one or more implicit factors (i.e. which use one or more factors generated within a device, hardware or software) or explicit factors both in-band (which send/receive authentication factors on the same channel generally used to connect to server systems) and out-of-band (which send/receive authentication factors on several mutually heterogeneous and/or anyway independent channels).

In addition, the new transmission channel can also be used in various ways, without limiting the present method to a particular representation. For example, it can be used according to one of the specified implementations to set up a secure connection both in single-channel and in multi-channel (OOB) mode or it can be used for delivering cryptographic keys and digital certificates, pre-shared secrets and cryptographic material as well as for transmitting and receiving data and information of various types and kinds.

More generally, a method according to the invention can be used in all the scopes where a strong authentication is required to access business, banking or government systems and in all the cases in which a given user is required to be identified, authorized and authenticated during a given operation such as, but not limited to, the access to protected and confidential resources, access to business systems, execution of banking and financial instructions, signing of a document by advanced, qualified or digital electronic signature and the like. Moreover, a method according to the invention can be used during provisioning procedures and, more generally, procedures for securing one or more communication channels (secure handshaking), for the creation and management of secure transceiving systems for messages, data and information, as well as in procedures for the exchange and validation of cryptographic keys and digital certificates.

Advantageously, said numerical sequence, constituting a one- or multi- factor identification and/or authentication piece of information, a cryptographic key, or one or more parameters used by the procedures for the provisioning and/or securing a given communication channel, is of a random or pseudorandom type and is transmitted and/or received over at least one communication channel operating with limited bandwidth.

Advantageously, said signal modulated and, then, transmitted or received via a communication channel and/or communicating means with limited bandwidth, operates in low-frequency regime.

Advantageously, said low-frequency signal is an audio signal in the range of frequencies audible to human ear.

Advantageously, said communication channel operating in low frequency can be a digital channel.

Advantageously, said signal is carried via a digital audio transceiving. In other words, the generated signal consists of a data stream digitally encoded in compliance with industry standards and suitable to be input to digital audio signal management and/or transmission systems, for example through digital encoding techniques of PCM, ADPCM type and digital interfaces of various types, such as, for example, I2C, I2S, SPI or the like.

Advantageously, said signal is transmitted by means of a digital codec.

Advantageously, said digital codec is a vocoder. Examples of usable vocoders are G711, G729, G722.1, iLBC, LPC, Silk, Opus, CELP, ACELP, MELP, GSM HR and FR, AMR, AMR WB, that is to say vocoders that span from mobile phones to SIP VoIP systems, desktops and switchboards, including applications such as Skype or the like, up to solutions used in satellite and government spheres and, in any case, when a very reduced vocoder bit rate, even in the order of a few hundred bits per second, is required.

Advantageously, said signal is carried via a digital data-transmission network.

Advantageously, said digital data-transmission network is a fixed and/or mobile packet-switched network. «Fixed and/or mobile» network means local area networks (LAN), geographic networks (MAN and WAN), personal networks (PAN) linked to Bluetooth and wearable devices, as well as IoT (Internet of Things) systems such as Mesh networks of various types and kinds. For example, the network can be Ethernet, Wi-Fi or any other type that falls within these categories.

Advantageously, said digital data-transmission network is a fixed and/or mobile circuit-switched network. The network is for example a voice and data network for terrestrial and satellite mobile telecommunication, i.e. mobile voice-and-data networks of the GSM type such as EDGE, UMTS, HDSPA, HDSUPA, LTE, as well as other types of mobile voice-and-data networks such as PMR, Tetra or similar, up to include satellite links such as Immarsat.

Advantageously, said communication channel operating in low frequency can be an analog channel.

Advantageously, said signal is transceived by cable.

Advantageously, said signal is transceived by PSTN type lines.

Advantageously, said signal is carried by transceiving acoustic wavefronts through the free space.

Advantageously, said signal is transmitted/received by acoustic transducers of the electret type, piezoelectric type and/or piezoceramic type.

Advantageously, said signal is carried by induction due to the interaction between resonant and non-resonant magnetic fields.

Advantageously, said induction is unidirectional, bidirectional and/or alternating.

Advantageously, said signal is carried by displacement of the electric field in resonant and non-resonant modes.

Advantageously, said displacement takes place in unidirectional, bidirectional and/or alternating modes.

Advantageously, said displacement is of the resonant type and/or it implements a phenomenon of transmission-and-reception of the scalar type, typically, but not limited to, in Near Field.

Advantageously, this signal is carried by kinetic/vibrational modulation which is carried out by the mechanical coupling of two or more systems through one or more mediation means.

Advantageously, the method according to the present invention can also be implemented by means of software stored on a data medium in which executable code lines for the execution of the method are recorded in machine-readable format. More specifically, it can be implemented and made available both within secure communication, authentication and code-form signature devices, where code is typically firmware or microcode, and within secure communication, authentication and code-form signature applications, typically software and generally as libraries and development tools (SDK, Software Development Kit).

Advantageously, the method of the present invention thus integrated can be used in all activation and provisioning procedures as well as in the handshaking ones suitable for creating secure communication channels between two or more elements of a system by resorting, either asynchronously or simultaneously, to implementations with one or more heterogeneous and typically independent transceiving channels (for example, but not limited to, one channel over an IP network, via TCP/IP and/or UDP protocols, and one channel according to the present invention). In addition, the method thus integrated allows the implementation of systems for one- or multi-factor identification and/or authentication and access, including but not limited to OOB, systems for secure communication of messages, data and information, remote digital signature, qualified and advanced electronic signature systems, systems for the secure exchange of cryptographic keys, digital certificates and pre-shared secrets.

According to an aspect of the invention, the latter provides a method for implementing and managing secure communications, comprising the steps of:

a) providing at least one first communicating means having transceiving functions for analog and/or digital signals;

b) providing a programmable computer device having transceiving functions for analog and/or digital signals;

c) setting up a first communication channel, via said first communicating means, between said programmable computer device and a similar device designed to receive transmissions coming from said programmable computer device; and

d) exchanging arbitrary numerical sequences, in the form of analog and/or digital signals, between said first communicating means and said programmable computer devices via said first communication channel, where said first communication channel between said first communicating means and said programmable computer device has limited frequency bandwidth, and in that said analog and/or digital signals are modulated to be carried via said first communication channel, characterized in that:

e) information, data and/or commands are exchanged via said first communication channel between said programmable computer devices and said first communicating means in order to manage secure communication processes comprising one or more among handshaking processes for the creation of secure channels, processes to deliver keys, certificates, cryptographic material and pre-shared secrets in general, provisioning processes of applications and devices, one- or multi-factor authentication and/or authorization processes, local and remote access processes to access computer systems, contract signing processes through advanced electronic signature and digital and/or qualified electronic signature also remotely, transactions and payments also compliant with the standard PSD2 and secure transmitting and receiving processes to transmit and receive messages, data, information, commands and notifications, and in that:

f) said first communication channel transmits and/or receives the aforesaid modulated signals, so that they can be carried via digital and/or analog audio communicating means, where said modulation comprises mapping the single bits of the arbitrary numerical sequence in order to produce an elementary baseband signal, said elementary baseband signal being subsequently processed through signal analog processing and/or digital processing techniques and centered in the frequency range most suitable for the communicating means.

A further aspect of the invention provides that said first communication channel simultaneously or not simultaneously transmits and/or receives, both in half-duplex and full-duplex mode, both synchronously and asynchronously and both operating on a single frequency range and on different frequencies, the signals being modulated so that they can be carried via communicating means based on resonant and non-resonant magnetic induction, resonant and non-resonant electrical displacement, electro-mechanical vibrations and optical communicating means based on the propagation of visible and invisible light waves and/or radiation.

In the method according to the invention, the size of the bitstreams and/or cryptographic bitstreams is completely arbitrary, i.e. it is not limited to a fixed value and, above all, the salient characteristic of the method is to allow the passage of a high-entropy data stream with uniform distribution, where each element of the bitstream can be, if desired, also totally independent from the following and the preceding ones, as typically happens in the cryptographic and strong authentication systems as well as in the securing communication channel ones and/or in case protected data and information are transmitted or received.

The described method allows therefore the action of exchanging arbitrary numerical sequences, in the form of analog and/or digital signals, to be optimally managed where the respective data stream has high entropy as happens in the case of cryptographic and strong authentication systems, but not only in this case.

The invention further concerns a method for implementing and managing secure communications, comprising the steps of:

a) providing at least one first communicating means having transceiving functions for analog and/or digital signals;
b) providing a programmable computer device having transceiving functions for analog and/or digital signals;
c) setting up a first communication channel, via said first communicating means, between said programmable computer device and a similar device designed to receive transmissions coming from said programmable computer device; and
d) exchanging arbitrary numerical sequences, in the form of analog and/or digital signals, between said first communicating means and said programmable computer devices via said first communication channel,

characterized in that said first communication channel between said first communicating means and said programmable computer device has limited frequency bandwidth, and in that said analog and/or digital signals are modulated to be carried via said first communication channel.

In the method of the invention, the limited frequency bandwidth is in a frequency range up to 10 kHz.

According to a preferred embodiment, the limited frequency bandwidth is in a frequency range up to 5 kHz.

The invention also concerns a portable device for transceiving arbitrary numerical sequences in the form of an analog and/or digital signal. The device comprises a power supply unit, a programmable control unit, cryptographic means to ensure the security of information contained in the device, and/or transmitted thereto and/or received therefrom, and at least one transducer for exchanging analog and/or digital signals with at least one external device. According to the present invention, said programmable control unit is programmed to process a signal adapted to carry said arbitrary numerical sequence and modulated in such a way that it can be carried via communication channels and communicating means with limited bandwidth.

Advantageously, the device further comprises user interface means.

Advantageously, the device can use the same channel with limited bandwidth, typically but not limited to low frequency bandwidth, on which said analog and/or digital signals are carried to communicate with other similar devices.

Advantageously, the device comprises other communicating means with further external devices via at least one channel different from the one having limited bandwidth, typically but not limited to low frequency bandwidth, on this channel said analog and/or digital signals and other types of data and information adapted to allow the device itself to communicate and interact with an external host (for example, but not limited to, a computer, notebook or laptop via a dedicated interface) are carried.

Advantageously, said power supply unit includes means for energy harvesting from external sources.

Advantageously, said transducer consists of a radiating body and/or an antenna, a capacitive or inductive element and/or an electro-mechanical and/or acoustic transducer of the electret type, piezoelectric type and/or piezoceramic type.

Advantageously, the device can be manufactured with the shape and size of a credit card.

Advantageously, the device can be manufactured with the shape and size of an OTP type token.

Advantageously, the device can be manufactured in the form of a USB stick able to be connected to electronic equipment with a corresponding port.

Advantageously, the device can be manufactured to integrate wireless connectivity technology including, but not limited to, Bluetooth, Wi-Fi, NFC and other PAN and LAN and Mesh type connectivity technologies.

## Brief description of the drawings

Further characteristics and advantages of the present invention will be more evident from the following specification of some embodiments depicted for illustrative purposes and without limitation, with reference to the accompanying drawings, wherein:

- figure 1 is a block diagram showing how an arbitrary numerical sequence is transformed into an elementary baseband signal for the transmitting step;
- figure 2 is a block diagram similar to that of figure 1 for the reception step of the elementary baseband signal and the recovery of the arbitrary numerical sequence;
- figure 3 is a block diagram of a device for transceiving an arbitrary numerical sequence in the form of an analog and/or digital signal according to the method of the present invention;
- figure 4 is a block diagram of a software implementation of the method according to the present invention;
- figure 5 is a schematic representation of a known provisioning method;
- figure 6 is a schematic representation of a secure connection and provisioning method according to an aspect of the invention;
- figure 7 is a schematic representation of a method of secure connection and provisioning between two users according to an aspect of the invention; and
- figures 8 and 9 are representations of limited bandwidths according to different aspects of the invention.

## Detailed description

A peculiar aspect of the method according to the present invention is the transmission and reception of one or more bitstreams and/or cryptographic bitstreams via communication channels and communicating means having limited bandwidth, typically but not limited to a low frequency audio channel (BF).

Bitstreams contain, generally but not limitedly, one or more authentication factors useful to symmetric-key algorithms as well as public/private-key algorithms both known in the literature, to identify and/or authenticate a given user providing, for example, not only the access to protected systems and/or resources but also, and not limitedly, the execution of procedures and commands subject to strong authentication both locally and on remote systems and/or, through them, on the computer or telecommunications device used by the user.

The factors thus sent, together with other data, information and factors simultaneously or asynchronously sent through other communication channels, can be used as elements of an existing or new generation authentication system.

The aforementioned bitstreams can further contain data and information useful for performing provisioning procedures, as well as procedures for securing communication channels (secure handshaking), both in-band (by using a single communication channel) and out-of-band (by using several communication channels that are heterogeneous and/or in any case independent with respect to each other), or they can contain codes and information used by qualified digital signature procedures and advanced electronic signature procedures for signing documents and contracts, or contain signature codes for the validation and non-repudiability of banking transactions as well as codes and cryptographic keys for short-term and long-term protection and validation of files, or can contain data useful for the exchange of cryptographic keys and digital certificates as well as to securely transceive data and information of various types and kinds.

In the method according to the invention, the size of the bitstreams and/or cryptographic bitstreams is completely arbitrary, i.e. it is not limited to a fixed value and, above all, the salient characteristic of the method is to allow the passage of a high-entropy data stream with uniform distribution, where each element of the bitstream can be, if desired, also totally independent from the following and the preceding ones, as typically happens in the cryptographic and strong authentication systems as well as in the securing communication channel ones and/or in case protected data and information are transmitted or received.

According to the present invention, the method of sending one or more bitstreams and/or cryptographic bitstreams via a communication channel and/or communicating means with limited bandwidth such as the audio communication channel, typically but not limitedly vocal and of analog or digital type, or via inductive-type magnetic, electromagnetic, electric, electrostatic, resonant and non-resonant communicating means as well as kinetic communicating means made by mechanically coupling one or more mediation systems, allows the bitstreams to be turned into a waveform and/or an electrical signal able to pass through the communication channel and/or communicating means itself, also by means of transducers and/or transport systems of various kind, whether there are or not audio compression systems (codec and vocoder).

The method of this invention involves the use of digital signal processing techniques combined with solutions adapted to synchronize the communication process by adding further data to control and manage the communication channel. In fact, communication can take place in different modes, i.e. both in half-duplex (exclusive bidirectional) and full-duplex (bidirectional and simultaneous) modes as well as in simplex (unidirectional) mode. Optionally, as will be explained below, the method may resort to additional algorithms for the dynamic error correction and real-time compression of data in transit.

It is assumed, by way of non-limiting example, that one or more bitstreams and/or cryptographic bitstreams to be transmitted are represented by a sequence of bits. Other types of sequences are possible without departing from what this method provides.

In order to turn one or more of the above arbitrary and/or pseudo-random bit sequences input to the transmitter into a signal and/or a discrete encoded sequence able to pass through a communicating means with limited bandwidth and/or an analog or digital transmission channel with limited bandwidth, typically but not limitedly low frequency bandwidth, it is necessary to resort to modulation techniques combining each bit, or plurality of the input bits, with one (or more) condition of a reference signal, also called carrier signal, typically but not limitedly having sinusoidal shape and, therefore, being cyclical over time. In the literature these conditions correspond to the symbols that are modulated through various techniques, typically but not limitedly, the decomposition of the reference signal into two signals generally offset by 90° with respect to each other, two signals that, when recombined, give rise again to the original signal. These signals represent two waveforms, an in-phase (I) one and a quadrature (Q) one.

For example, if the signal transmitted by the carrier wave is represented by:

$$Acos(2\pi Ft+\varphi)$$

in which A indicates the amplitude of the signal, F represents the frequency and $\varphi$ the phase, the decomposition of a function of this type according to trigonometric rules is given by:

$$Acos(2\pi Ft+\varphi) = Icos(2\pi Ft) - Qsin(2\pi Ft)$$

where, respectively, $I = Acos(\varphi)$ e $Q = Asin(\varphi)$

As can be seen, at any time I and Q can reconstruct the original signal. Thanks to the depicted technique it is possible to separately act on I and Q by amplitude (A) and phase ($\varphi$) in order to unambiguously determine a precise point on the Cartesian plane. This point is the piece of information each time modulated by this technique and represents, in turn, an information content. This element is known in the literature as symbol.

As evident, the more points can be distinguished in the Cartesian plane, the more elements can be addressed. More elements allow, in turn, the information content transmitted at any given time to be increased. The set of possible symbols constitutes the so-called "constellation". Typically, the increase in symbol density entails the need of being able to discern adjacent symbols at the receiver. In conditions of noise over the channel, disturbance, distortions etc., the more the information content increases and the more, as a result, the errors made by the receiver will increase without being able to correctly discern a symbol from the adjacent ones.

Different techniques to optimize the transmission signals (I and Q) and for filtering, equalization, convolution, etc. can be adopted in order to strike the best balance between the capacity of transmission and reception over the channel in the time unit, by means of the depicted technique and the actual channel capacity of carrying the resulting information content. Typically, these techniques are applied to both the transmitter and receiver sides.

If required, together with this algorithms are adopted which, by adding further information content to the transmitted data, allow the detection, at the receiver, of one or more errors and, compatibly with the method used, the reconstruction of the information received when disturbance and transients are in the channel itself. These methods are known to those skilled in the art as Forward Error Correction (FEC) algorithms.

By adopting specific modulation schemes and optimization techniques for transceiving signals and by using the above technique or other techniques such as of impulsive type, a high entropy numerical sequence, therefore having uniform distribution, can be sent not through a data channel but through a communicating means with limited bandwidth and/or a channel able to carry an electrical signal with limited bandwidth, typically audio but not limited thereto. In the case of audio channel, if this is carried via digital transmission systems (ISDN, GSM, IP networks, VoIP systems, etc.) it is also subject to further processing of the signal and subsequent compression by codecs and vocoders operating in low frequency regime. If specific modulation and signal processing schemes are used, the above technique can operate both in analog telecommunication networks and in digital telecommunication networks, as well as directly, by driving a speaker and/or a microphone or resorting to magnetic, electromagnetic or electric resonant and non-resonant induction techniques or electric field displacement techniques as well as to mechanical coupling techniques, thereby transmitting the information in the form of kinetic energy via one or more mediation means.

If the so-generated low-frequency signal is carried via codecs and vocoders belonging to digital telecommunications systems and networks, by changing the parameters of the modulation and demodulation subsystems in real time, it is possible to compensate for various problems occurring during the communication process, such as the activation of acoustic echo cancellation (AEC) or the signal reduction due to Voice Activation Detection (VAD) systems typical of modern telephone communication systems.

Furthermore, in all cases any noise and transient along the communication channel can be compensated for, by dynamically readjusting the modulation scheme, i.e. by changing the number and position of the symbols used as well as the type of reference signal used (carrier), for example by switching from a sinusoidal signal to another type of periodic waveform, or by switching from a system with a periodic reference signal to one with a time-based pulse reference signal.

In the latter case, the carrier signal is replaced by a pulse modulated over time so that it can still be considered a signal with limited bandwidth and, at the same time, it can still carry the original information not only by identifying a symbol in the context of the constellation of the modulation system, therefore as a function of the phase and/or amplitude of that pulse, but also thanks to the time in which that pulse is detected by the receiver with respect to a predetermined scheme common to the communication systems. The receiver, seeing that the above pulse comes at a given time shortly before or shortly after the expected time, is thus able to discern an additional information unit, for example a 0 (if it comes before) or a 1 (if it comes later) or vice versa.

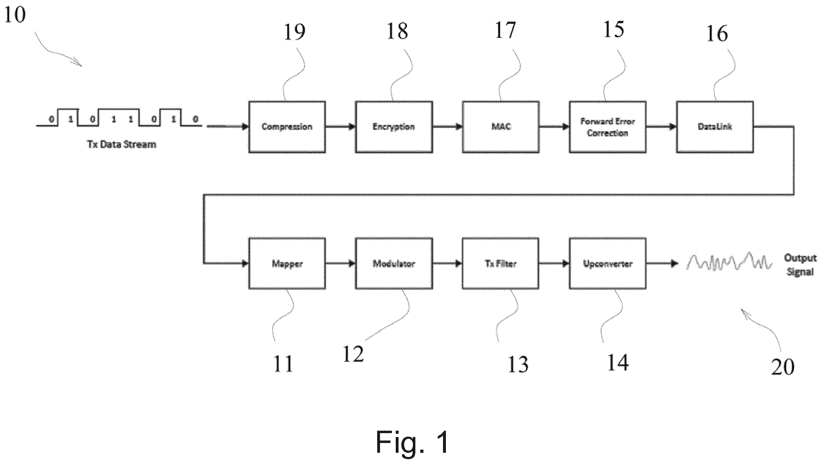

The diagram in figure 1 shows a so-called "baseband" implementing the above functions. Figure 1 shows an arbitrary numerical sequence 10, also referred to as "Tx Data Stream", which is represented herein as a sequence of bits that can assume the values 0 and 1.

In its basic form, in block 11 (Mapper) the baseband maps the single elements to be transmitted, for example the bits of the sequence (or bitstream) 10, which as a result are modulated in the context of the reference constellation by means of the modulation stage 12 (Modulator) which produces the elementary baseband signal. This signal is in turn processed in block 13 (Tx Filter) so as to add, typically by using convolution techniques, additional information contents able to increase the signal ability to pass through the channel in the best possible way.

Finally, the frequency of the signal is raised in block 14 (Upconverter) so as to center it in the most suitable frequency range for the communicating means. The signal 20 thus generated (Output Signal) is analog in nature or else it can be quantized and transmitted as a discrete data stream according to common industry standards (e.g. PCM).

The baseband depicted in figure 1 constitutes, as a whole, the substantial element of the method of the present invention and can be implemented by resorting to different schemes and modulation techniques known in the literature and, more specifically, customized. Therefore, it is not intended to be limited to any particular modulation technique or mapping scheme of the elements to be transmitted in symbols, nor to be limited in relation to the signal processing techniques used.

In addition to the 11-14 blocks already described, additional blocks must be added to the modulation system in order to make robust and reliable the transmission method of the cryptographic bitstream. These blocks, though represented in figure 1, are not essential in implementing the system, but are generally useful for the communication between the transmitter and the receiver to be made reliable and easy to use.

For example, the block 15 (Forward Error Correction) is intended to make the data transmitted as free as possible from errors introduced into the channel, thus meaning not only errors caused by the physical communicating means (disturbance, spikes and transients, intermodulations, fading, etc.), but also the effect of codecs and vocoders that may be present in the means. The latter introduce into the signal a series of approximations and distortions which can jeopardize the correct reproduction of the signal once synthesized at the receiver, i.e. of the originally transmitted information (bitstreams and/or cryptographic bitstreams). This category of processing modules includes the Forward Error Correction and/or Erasure Correcting Code algorithms known in the literature such as for example the Viterbi algorithm (soft and hard), Reed Solom, LDPC, convolutional encoders, Turbo codes, TCM, etc. If there is block 15 (FEC), it can also be integrated into block 16 (DataLink) without departing from the present invention.

Another type of processing block is for example block 16 (DataLink), which handles the synchronization, i.e. provides the receiver with a way to properly lock the incoming data stream, recognizing each time the exact starting point of each sequence related to the transmitted bitstream and/or cryptographic bitstream. These modules, also known in the literature, in relation to the ISO-OSI stack typically operate at layer 2, i.e. the datalink layer, and may be of different types, depending on the intermediate communicating means and/or coding systems of the audio stream,. Some examples that can be mentioned are SDLC, HDLC, LAPD, LLC, PPP, etc.

The data link encapsulates into further additional elements the bitstream to be transmitted, thereby creating a frame structure and possibly managing the segmentation, sequencing and reconstruction of a larger datagram transmitted via multiple frames. The datagram basically contains one or more bitstream(s) intended to be transmitted. Typically, it performs this operation during transmission before mapping the various elements in the modulator symbols. The data link can include error control systems (e.g. CRC) and, in some embodiments, also error correction systems of various types (block 15).

In addition to the synchronization and error-correction modules, the transmitted bitstreams and/or cryptographic bitstreams may also be subject to additional validation at the transport layer at block 17 (MAC, Message Authentication Code). In particular, the bitstreams can be protected by one or more cryptographic session keys and authenticated by Message Authentication Code (MAC) algorithms; these include MAC type algorithms based on hash, Keyed Hash H-MAC, DSA, ECDSA, etc. functions.

Regardless of the nature and type of data exchanged, the authentication of messages (MAC) allows the receiver to verify the integrity thereof while having the certainty that the person who originated them has the declared identity. MAC algorithms can be based on pre-shared secret keys, public and private key paradigms, or they can be based on one or more keys derived when creating the secure communication channel. In any case, as known to those skilled in the art, the authentication consists in appending a MAC usually on the tail end to the bitstream to be transmitted before passing the whole to the data link. There are several techniques that can be used to append this control code, which in turn may or may not be encrypted and can be applied to a bitstream that is already encrypted or not. If the MAC is applied to an encrypted bitstream, the MAC thus appended corresponds to the Encrypt-then-MAC technique. However, it should be noted that this is a particular representation and does not exclude the other possible ones.

The bitstream can in turn be encrypted inside the baseband through block 18 (Encryption) initialized with a cryptographic key shared by the transmitter and the receiver. Encryption applied in the baseband context allows the communication channel to be protected regardless of the content it carries. The channel encryption is done through both a symmetric-key algorithm (3DES, AES, etc.) and the definition of at least one cryptographic key pre-shared upstream between all the elements involved in the communication system. This key, similarly to MAC, can be based on or derived from pre-shared secrets or can be derived during the creation of the secure communication channel by using one of the algorithms known to people skilled in the art, or else can be stored a priori both in the transmitter and the receiver. It may also vary over time in the context of the single communication session. In the baseband, solutions to protect information contents can also be implemented by resorting to scrambling techniques, by directly acting on the mapper and the demapper through the use of LFSRs (Linear Feedback Shift Register) initialized with one or more cryptographic keys or pre-shared secrets. It should be noted that any one of the solutions used to enable any cryptographic and/or native scrambling support in the baseband, even if different from those described here, does not change the nature and purpose of the present method.

Above all, if the transmitted bitstream is not cryptographic, it can be dynamically compressed, in real time, at block 19 (Compression) that implements one or more loseless-type compression algorithms such as RLE, LZO, PPM, BZIP, etc. The baseband can activate and deactivate the compression, automatically and in real time, by each time comparing the set of incoming data with the same set of compressed data and, as a result, by enabling the compression only if a real gain, i.e. a smaller amount of information to be transmitted in the time unit, is detected.

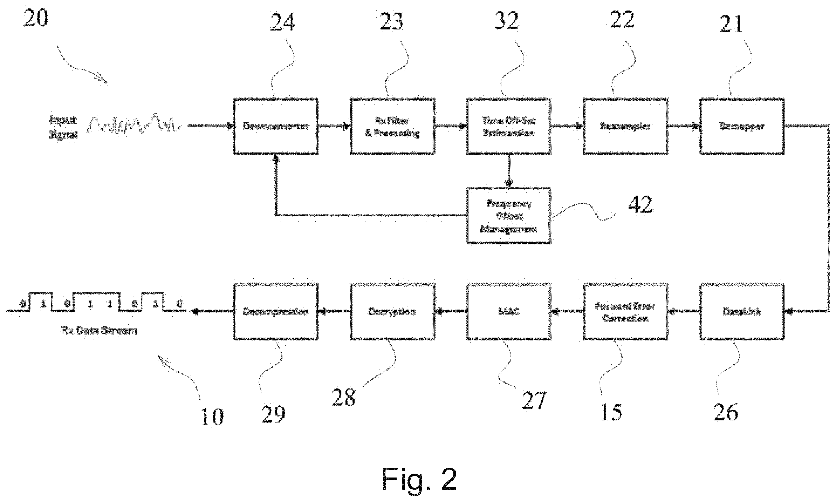

The diagram in figure 2 depicts the received block sequence, substantially reverse with respect to the transmission baseband of figure 1, in order to extract the original numerical sequence 10 from the received signal 20. In summary, the receiver must perform the reverse process in which first of all the received signal must be demodulated, then the received datagram must be reconstructed by compensating for any errors and decrypting it, and finally it must be decompressed to obtain the originally transmitted bitstream 10.

In particular, the numerical sequence 10 of the originally transmitted elements is reconstructed after reconverting the signal 20 to baseband at block 24 (Downconverter) and then the signal is processed at block 23 (Rx Filter & Processing) to be cleaned up from various types of disturbance. Any frequency off-sets, encoding and/or transport time drifts due to the communication channel or communicating means, or any synthesis problems at the receiver are evaluated at block 32 (Time Off-Set Estimation) and at block 42 (Frequency Offset Management) in order to be then compensated for at block 22 (Resampler). The sequence of elements transmitted at block 21 (Demapper) is reconstructed from the signal thus processed.

Similarly to the transmission side, on the reception side a block 26 (DataLink) can be provided that allows individual frames to be reconstructed by locking them in the context of an apparently-random frame (sequence), and then one or more bitstreams transmitted with the single datagram are provided. Then there are the block 25 (Forward Error Correction) if not already integrated in block 26, the block 27 (MAC), the block 28 (Decryption) and the block 29 (Decompression) which perform the reverse functions with respect to those of the corresponding blocks already shown in figure 1.

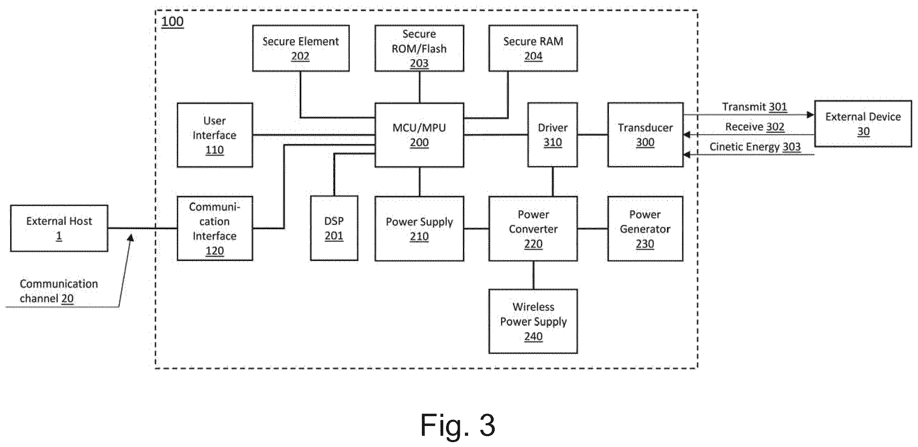

The diagram in figure 3 shows a possible embodiment of a portable device 100, defined by a dashed outline, which implements the method of the invention described so far.

In particular, the device 100 comprises a programmable control unit (MCU/MPU) 200 which can have a digital signal processor ('DSP') 201 combined therewith or integrated therein. Other characteristic elements of the device are a transducer 300 and its drive circuitry 310 (Driver).

The device 100 may also comprise a user interface 110 for the user to interact therewith and a communication interface 120 to communicate with another device and/or external host 1 through a communication channel 20.

The user interface 110 consists of a man-machine interface which can consist of one or more traditional (electromechanical) or capacitive push buttons, as well as a combinatorial keyboard, a reader of fingerprints or biometric data in general. By pressing a given button, the user can for example activate the sending of one or more bitstreams, possibly cryptographic, or start a one- or multi-factor identification or authentication procedure, a mutual authentication procedure subject to the transmission and reception of one or more bitstreams, possibly cryptographic, or set up a secure connection, perform the provisioning of the device itself, sign a document or authorize a given operation or perform a signature process, exchange cryptographic keys, receive and/or transmit as well as access protected data and resources, etc.

Advantageously, one or more push buttons can be replaced by a combinatorial keyboard through which the user, by typing a code exclusively known to him, can activate the same procedures. In a further advantageous way, this keyboard can be replaced by a fingerprint biometric reader that, after the recognition of one or more fingerprints recorded in the device itself, can activate the sending of the mentioned bitstreams and/or cryptographic bitstreams or the start of mutual authentication procedures, or whatever is provided for the device 100.

Advantageously, the user interface 110 can include one or more LEDs or a display that can inform the user about the operating status of the device 100, for example about the outcome of the last operation, or can visually report to the user one or more codes (such as, but not limited to, of OTP type) to be used on other systems, such as on a website, or dictate the codes through a phone or VoIP system to an interlocutor or an automatic responder.

Equally advantageously, the user interface 110 can provide, along the edge, capacitive sensors able to detect the time when the device itself is grasped by the user, and as a result turn on the various systems and activate the device itself. The user interface 110 can be provided with one or more push buttons adapted to switch the operating mode, thereby making more versatile the use of the device 100.

The communication interface 120 allows the device 100 to communicate via a special channel 20 - obviously in secure way - with another external device 10. The latter can be, in turn, another device 100 or any other host device such as, but not limited to, a computer, notebook, smartphone, etc. equipped with a corresponding communication interface 120. The communication interface 120 can be of various types such as, but not limited to, USB, NFC, Bluetooth, Wi-Fi, etc.

The device 100, via the communication interface 300, can in turn communicate with other devices 100 to enable further security services. In addition, several devices 100 can be interconnected one another through the various available communication interfaces 120 and 300, in order to create multi-factor and/or 4-eyes and superior authentication systems where several devices 100 have to be simultaneously combined to perform a given operation such as, for example, accessing a system or enabling a given function.

The device 100 also includes an organized power supply section 210 consisting of various optional components. For example, the power supply section 210 can be a simple battery of the type already available on the market. Alternatively, or in combination, the power supply section 210 can be extended by a battery recharge section that exploits possible energy harvesting sources, such as for example:

- a magnetic and/or electric and/or electrostatic, resonant and non-resonant wireless recharge 240 (Wireless Power Supply), in accordance with various standards and solutions already available on the market (as well as to future ones);
- a recharge through the transducer 300 itself, by turning into electrical energy the typically kinetic energy 303 that affects the device;
- a recharge through generators 230 (Power Generator) of the MEMs type (typically consisting of piezoelectric converters), TEG and TEM (thermoelectric converters).

The transducer 300 is advantageously bidirectional, i.e. able to transmit and receive signals. In other words, various functions are embodied in the translator 300, mainly both transmission and reception functions. In the first analysis, the device 100 could be implemented with only-transmission means based on a traditional transducer, i.e. a speaker. However, this reduces the possible representations as, however small, a speaker introduces a number of further mechanical and operational limitations.

These limitations are overcome by piezoelectric, electret or, even better, piezoceramic solutions, wherein the speaker no longer consists of a coil and a magnet, but of a piezoelectric converter able to cause in the surrounding environment variations in the communicating means, typically but not limited to air, thereby generating acoustic transmission wavefronts denoted in the diagram by the reference 301 (Transmit). By resorting to these technologies, the same transducer 300 can also be used as a microphone, i.e. to pick up the surrounding-ambient sound, referred to by 302 (Receive), as already possible through some electronic devices and smartphones.

Therefore, although transduction lines 301 and 302 are depicted as separate for clarity (transmission: speaker; reception: microphone), the single block representing the transducer 300 and the respective drive circuitry 310 reveals that the transducer itself can indifferently operate in both modes.

In addition, the transducer 300 and the respective drive circuitry 310 allow not only the modulated signal to be received and transmitted by the method of the present invention, but also energy to be harvested through vibrations that affect the whole device 100 and are denoted by reference 303 (Kinetic Energy). For this reason, a connection between the drive circuitry 310 and the power conversion section 220 (Power Converter) has also been shown in the diagram and has been specifically introduced to adapt the harvesting of various types of energy from the possible available sources.

The ability of the transducer 300 to operate both in transmission and reception advantageously allows the portable device 100 to execute functions even more advanced than the simple OTP authentication.

It is also worth noting that the transducer 300 in general is intended to include the type of means used to carry signals. In other words, transmission 301 and reception 302 can take place through longitudinal variation of the air wavefronts with respect to the transducer itself and, in this case, we will talk about an acoustic signal in the free space. However, there are other methods through which other types of transducers 300 can operate such transmissions and receptions of an analog signal with limited bandwidth, typically but not limited to low frequency bandwidth, for example:

- analog transmission via longitudinal acoustic waves in free space, analog transmission via electrical cable and transmission via resonant and non-resonant magnetic induction. The first two methods are easy to understand, as well as the method of signal transmission via magnetic induction, both resonant and non-resonant. The latter can also be implemented in a unidirectional, bidirectional and/or alternating way;
- transmission by resonant and non-resonant displacement of the electric and/or electrostatic field. Also in this case, it can be implemented in a unidirectional, bidirectional and/or alternating way, as known in the literature. In particular, in the case in which the displacement of the electric and/or electrostatic field is carried out in a resonant manner, a particular phenomenon of scalar transmission in near field occurs, as reported in some academic and frontier-research texts, widely available but not so known to all those working in the sector; and
- transmission via electro-mechanical kinetic/vibrational modulation due to mechanical coupling with and without one or more mediation means. If the transducer 300 is of electromechanical type, such as for example a piezoelectric transducer, the transducer is able to transmit and receive signals 301 and 302 through vibrations, as well as to generally use the vibrations 303 that can be used to harvest energy. If there is a mechanical coupling between the device 100 and an external device 30, these vibrations allow information to be transferred as in the other cases, even though with a further limited bandwidth.

In any case, these solutions advantageously allow the modulated signal to be transmitted to and/or received from one or more external devices 30 located nearby or remotely. In fact, these external devices 30 can be physically coupled devices with and without one or more mediation means or devices placed in the immediate vicinity (a few centimeters), as well as positioned even at a greater distance (even some meters).

In fact, if the transducer 300 is not made up of either the above nor an NFC system, but instead for example of a Bluetooth or Wi-Fi radio, then the distance can considerably increase. In other words, the use of PAN and LAN technologies such as for example Bluetooth or Wi-Fi is not limited only to communication towards the external host 1 via the communication interface 120, but can also be taken into account for communications between the device 100 and the external device 30, the latter being used either for authentication, also through the device 100 itself, or to reach a system where the authentication itself is carried out. Similarly, this solution can be considered in order to extend the interaction of the devices 100 to other devices 100 from short distance to medium distance (PAN and LAN), what can be done in all cases by resorting to the transducer 300 and using propagation systems to propagate the modulated signal through acoustic waves as well as by resorting to magnetic, electrical and/or electrostatic induction solutions resonant and non-resonant.

The type of transducer 300 is determined by the particular representation. If the device is advantageously made up of systems so miniaturized that they can be integrated into a form factor typical of a credit card, it is currently difficult to incorporate a Wi-Fi radio, but it is still possible to provide a Bluetooth radio, as happens with some solutions already on the market.

Therefore, the particular method of the present invention could be implemented in a traditional communication system, where the communication takes place through an analog or digital transmission channel, as well as in a more innovative system, where the communication takes place through channels with limited bandwidth, typically but not limited to low frequency analog type, that is to say:

- audio on cable, through electrical signal;
- acoustic in free space;
- magnetic;
- electrostatic;
- optical, i.e. based on visible and non-visible light waves/radiation; and
- kinetic.

Among these, it should be noted that the most widespread channel is the acoustic channel, which is already present in information and communication devices produced on a large scale and available to all users (smartphones, computers, notebooks, telephones, VoIP phones, headphones and microphones, etc.). However, the acoustic channel can be extended/completed by considering also the other types of communication interfaces since, more generally, the device 100 can be engineered by providing also more combinations of the above mentioned solutions and, therefore, it can provide more transmission-and-reception types and interfaces.

Therefore, while keeping the architecture as general as possible, the device 100 can be implemented for example in the form of:

- secure portable devices such as tags or dongles for key rings;
- security tokens, typically but not limited to OTP type;
- USB-type security tokens;
- smartcards based on various types of architectures, typically but not limited to ISO 7816; and
- device having the typical shape and size of a credit and/or debit card.

Since the device 100 is mainly, but not exclusively, used in the field of transceiving one- or multi-factor identification and/or authentication information, of signing and managing the provisioning and secure communication steps, dedicated means are also available for this particular kind of use. In the embodiment of figure 3, for example, at least one cryptographic chip 202 (Secure Element) is highlighted, through which cryptographic keys, credentials and secrets such as public/private key certificates or symmetrical keys and pre-shared secrets in general can be stored in a secure manner as well as used with various cryptographic and authentication algorithms known in the literature.

The device 100 can also include a ROM or a flash type memory 203 (Secure ROM/Flash) which in turn is secure and where the firmware, any boot file system, the system code and data reside, as well as an encrypted or non-encrypted RAM 204 (Secure RAM). In addition, other security components can be provided, such as Secure Boot solutions that verify the integrity of the system and the code itself during firmware and/or microcode starting steps.

These elements can be external to the programmable control unit 200, or can be fully or partially integrated therein. In fact, there are currently on the market security microcontrollers (MCUs) and/or microprocessors (MPUs) which integrate all or part of these elements and are provided with various protection measures in addition to those described herein by way of example. Various representations of the device with and without some of the above additional security elements may be made without departing from the scope of the present invention.

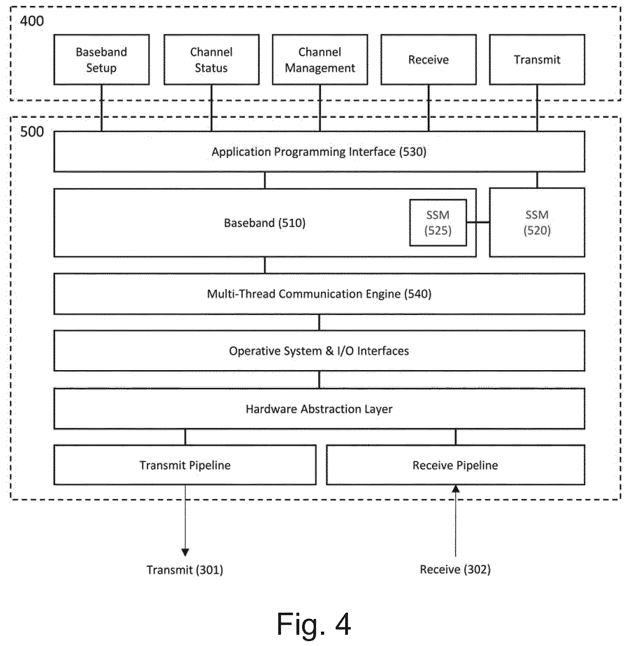

As depicted in the diagram of Figure 4, the method according to the present invention can also be implemented through a software that allows the transmission of bitstreams, cryptographic or not, in order to create one- or multi-factor identification and/or authentication systems, activation and provisioning procedures, handshaking procedures adapted to create secure communication channels between two or more elements of a system by resorting one or more transceiver channels that are heterogeneous and/or independent from each other (for example, but not limited to, a channel over IP network, via TCP/IP and/or UDP protocols, and a channel according to the present invention), procedures for the secure exchange of keys and certificates as well as for achieving secure solutions for generic communications of data and information via traditional telephone lines, GSM networks, VoIP telephony platforms and so on.

In this case, the method can be integrated into computer applications of any kind and type and computer and telecommunications devices, such as modern smartphones. In this context, the method can typically be used upstream and/or downstream of the audio communication system in low frequency, by using the speakers and the microphone of the computer device, as well as upstream and/or downstream of other systems and sensors present in the device such as accelerometers, gyroscopes, thermal sensors, infrared, lasers, proximity sensors, etc. If low frequency acoustic channel is used, the audio stream, typically digital and corresponding to the signal generated in this way, can be sent to codecs and vocoders of the transmission systems used each time by the applications. For example, it can be sent to codecs and vocoders of a telephone GSM subsystem, or to those of a SIP or proprietary VoIP system, such as Skype or the like, or even directly to the speaker and microphone of the device. The above stream is sent by transforming the low frequency signal produced according to the method into a numerical sequence based on what is prescribed by the various standards typically used in this context (PCM, ADPCM, etc.). This transformation does not affect the method in any way, but is only a particular representation of the low-frequency information stream from this product, the stream being then adapted to be carried through the existing audio interfaces.

Similarly, the limited-bandwidth signal produced according to the method may be transmitted and received by resorting to the above mentioned computer devices by using other types of communication interfaces. By way of example, in case of mechanical coupling between two devices, the transmitter may use the speaker or speakers of its own device to send its bitstreams and/or cryptographic bitstreams and the receiver may use the accelerometer of its own device, possibly but not necessarily in addition to the microphone. The receiver, by capturing the signal from the accelerometer, can decode the transmitted data by resorting to the method of the present invention. Various other combinations are possible without departing from the scope of the present invention.

In the context of software representations, the method is therefore "summarized" in the form of procedures that are not carried out in the MCU/MPU 200 of a secure device 100 such as the one shown in Figure 3, but typically within libraries and development tools supporting the applications in the form of SDK (Software Development Kit). These libraries are "turnkey" systems, given to those who want to integrate the particular functionalities implemented through the method in order to create, in turn, secure applications of communication, authentication and signature by using new communication channels possibly in OOB ("Out of Band") mode depending on their own security processes and algorithms.

Functions such as API (Application Programming Interface), in various modes, are provided in these libraries, as known to those skilled in the art.

As mentioned, the digital data stream produced by the method in this context can be sent not only as input to codecs and vocoders (such as those of GSM, VoIP systems, Skype, etc.), but also directly to the sound card of the device in which it is running. A known example is given by the DTMF generators that input a signal modulated according to the afore mentioned standard into an analog or digital audio stream sent through pre-existing systems. Similarly, the digital data stream produced by the method can be transmitted via one of the other transducers and/or actuators in the device.

As shown in the diagram of figure 4, the method implemented in the baseband 510 is communicated to applications through API 530 (Application Programming Interface) where they can in turn communicate by using a series of functions 400 (Baseband Setup, Channel Status, Channel Management, Receive, Transmit) to manage the new communication channel. It should be noted that, in this way, this is a system that allows general data-communications and not only identification and/or authentication communications.

The baseband 510 is in turn isolated from the underlying operating system and hardware by means of the communications management layer 540 (Multi-Thread Communication Engine) and by means of the functions - generally dependent on the platform - through which the communications take place with the hardware interfaces or codec/vocoders present in the system itself.

In practice, the block 500 creates a library or SDK for the method and the respective high-level interface 530 (API) that can be used by the applications to communicate. As mentioned above, this scheme allows generic communications to be carried out. However, if a secure system of identification and/or authorization, of signature or secure connection to remote systems or secure communication in general is to be implemented, as already stated in the case of device 100, identification keys, certificates, the Personalized Security Credentials and the respective authentication algorithms must be stored and managed in a secure manner. Cryptographic keys, initialization vectors and shared secrets that are securely delivered during the provisioning step (the term, known to those skilled in the art, refers to the pairing step of the security solution, generally starting downstream of the sharing of one or more symmetrical or asymmetrical cryptographic keys, as well as protected support data, if any).

In the device 100, this is done thanks to the cryptographic chips 202, while in software implementation it is done through the so-called Software Secure Elements 520 (SSM). In the more general case, this component can be implemented externally by the application, depending on the purpose of use of the method by resorting to solutions and techniques known to those skilled in the art. It can be conveniently integrated into the library itself (520) and can also be extended to baseband (525).

In this context, the security module 520 is made by resorting to the same solutions and techniques known to those skilled in the art, so it is not an element of innovation with respect to what is already known and available in the art, and herein we do not focus on technical or implementation details of this component. As regards to the security component 525, in this case the baseband not only performs its function of modulation and demodulation of arbitrary numerical sequences, but also implements an additional protection level by directly acting on the nature of the signal, i.e. on the modulation. In this case, security has a dynamic effect on modulation at the physical layer. In particular, the modulation scheme may vary depending on a cryptographic session key or a pre-shared secret managed by the application or module 520. These elements may statically or dynamically affect both the transmitter module 11 (mapper) and the receiver module 21 (demapper) thus varying the criteria for mapping the bits into symbols by resorting to various techniques known to those skilled in the art, and may affect as well the modulation block 12 in transmission and the similar blocks in reception. The blocks 11 and 21 can also be dynamically supplied, by varying the schemes to map the bits into symbols based on pseudo-random sequences generated, for example, from LFSR (Linear Feedback Shift Register) initialized with one or more shared secrets, thereby creating a mechanism known in the literature as "scrambler". These are possible implementations at layer 1 of the ISO-OSI stack in the context of the software representation illustrated herein which, however, takes into consideration also the other software representations or the direct integration of the proposed method in a secure communication application, creation of secure communication channels, one- or multi-factor identification and/or authentication and signature for computers, notebooks, laptops, server systems as well as smartphones and computer devices in general.

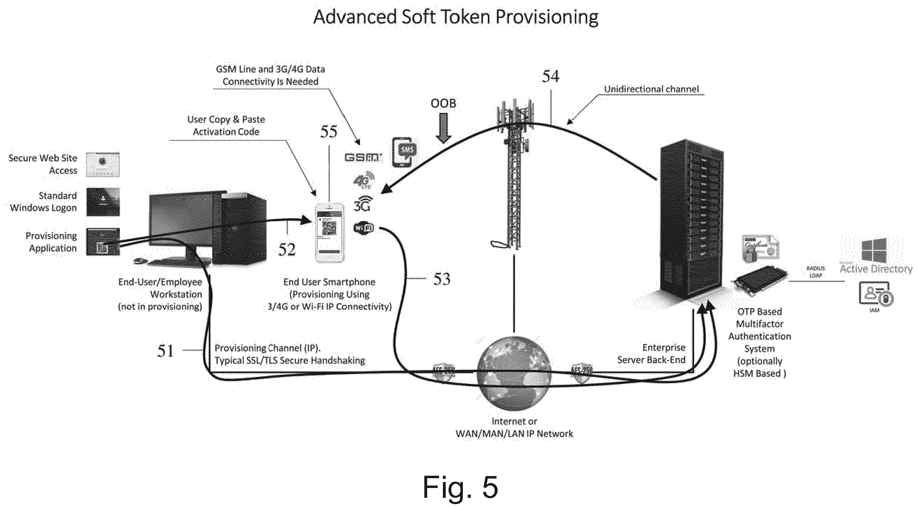

Figure 5 is a schematic representation of a known provisioning method involving a computer and a smartphone that downloaded an authentication and security mobile application (app).

As previously mentioned, the most important step is the provisioning, which takes place when the app has been downloaded by the user on his smartphone and must be activated and paired with the identity of the user himself.

Without going into verification of user identity, Figure 5 shows, at a high level, a known provisioning step. In current and more advanced systems, generally after verifying the identity of the person, an activation code is sent via SMS to the phone and the person must copy and paste it into the app for the activation thereof. This aims to verify the user's phone number (SIM), while creating an OOB mechanism with respect to the rest of the system (IP network) used for provisioning. The code sent via SMS is used as a pre-shared secret (Pre-Shared-Key) to ensure that the mobile app and server can set up a secure communication channel over the IP data network, typically Internet. This point is crucial for further considerations of the method. The secure channel is created by resorting to one of the algorithms known in the literature or to proprietary algorithms and provides for the exchange of multiple data packets in both directions. In this context, this can only be done through the IP channel, generally with TCP/IP transport, as this is the only bidirectional channel available between the parties involved in the provisioning process.

In particular, the user connects to the website of the company or bank or, in any case, to a server of the latter through a dedicated application, thereby setting up a secure connection (connection 51) and receives a control/unlock code that must be copied into the app. In more advanced cases, this code appears on the screen of the PC (in a dedicated application, on the browsed website or in the received email), possibly in the form of QRCode. The user types it or, by using the camera of the smartphone, scans it inside the app that is in the provisioning step (as indicated at point 52). Generally, it has to be copied manually by the user from an email, from a document received in a sealed envelope via mail or delivered by hand, from an SMS, and so on.

Now the mobile application communicates via data network (3G, Wi-Fi, etc.) with the servers (see connection 53) and an activation code specific to the mobile app is usually received via SMS (through the connection 54) by the user who in turn must copy and paste it (step 55) in order to activate the app itself.

It should be noted that, in this known method, the following unfavorable conditions occur:

- the user is involved in the activation process
- the activity of copying and pasting the activation code is prone to errors that must, in turn, be managed (for example, by retransmitting a new activation code since this code is typically used only once and/or in any case by limited time)
- the OOB channel (denoted in Figure 5 by the connection 54) allows the verification of the telephone number indicated by the user (circuit-switched network), with the exception of the vulnerabilities of the GSM SS7 protocol, and is unidirectional
- the activation code, having to be limited in length, has a very limited informative content and thus limits the options available in terms of security
- finally, the data connectivity of the user's mobile phone is required (and this is not always to be taken for granted; the systems must also manage the condition of the user's lack of credit which, in terms of data connectivity, is not as easy to resolve as the case of a call to a toll-free number or, anyway, an incoming call).

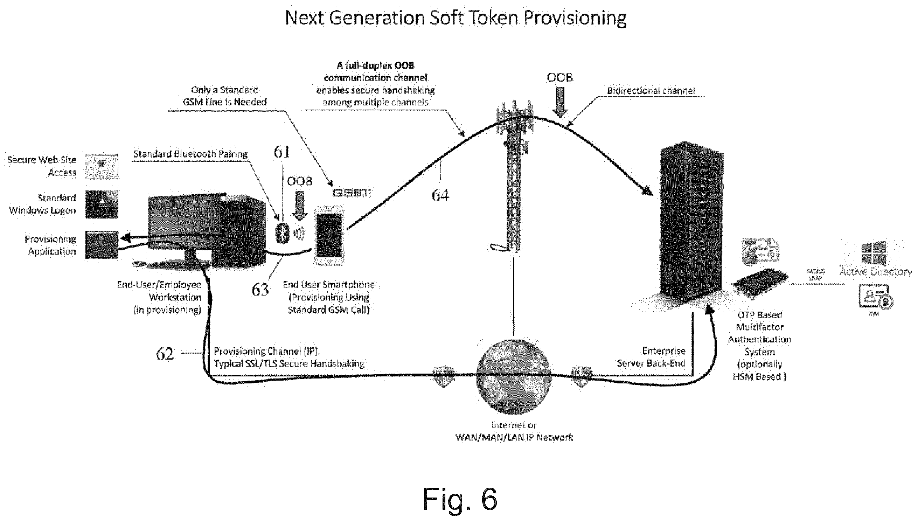

Figure 6 schematically depicts a method according to an aspect of the invention and adapted to overcome the mentioned drawbacks.

To better clarify the differences with respect to the known technique, it should be considered that in the representation of figure 6, the case is always the same, the app is always the same, the PC and the user are unchanged.

However, looking at the diagram in figure 6, a Bluetooth link (indicated by number 61) can be observed between the phone and the user's PC.

In this case, the user operationally starts the normal Bluetooth pairing (see numeral reference 61) between his PC and smartphone (if this pairing is not already active). This operation is certainly very common, even compared to some of the others described so far.

Therefore, the user connects to the website of the company or bank or, anyway, to a server of the latter through a dedicated application, thereby setting up a secure connection (connection 62) through which the server systems communicate with the PC. Once this is done, the system automatically starts a standard telephone call (connection 63) via smartphone for example to a toll-free number or, vice versa, the back-end server system starts a standard telephone call to the telephone number referred by the user. A full-duplex OOB channel is therefore available (consisting of connections 63 and 64). Through this channel and through the SSL/TLS channel (connection 62), all systems can simultaneously carry out the pairing (multiple and automatic provisioning).

Compared to the previously described case referring to Figure 5, in fact, it can be noted that thanks to the proposed method the OOB channel is not unidirectional and not even limited to the exchange of a few data (the activation code). In addition, the OOB channel is not circumscribed between the servers and the smartphone, but also extends to the user's PC.

This last aspect allows the provisioning of all the systems in the communication chain to be carried out with a single OOB connection through the above mentioned method. In this case, this communication chain consists of several bidirectional audio communication channels:

Bluetooth between the PC and the phone
GSM between the phone and the "toll-free number"
VoIP, typically G.72x, between toll-free number and the server systems Therefore, they are all part of the already described digital and vocoder channels. and data:

Bluetooth between the PC and the phone

IP, typically but not limited to TCP/IP, protected by SSL/TLS from the PC to the server systems and, via the PC, from the smartphone to the server systems

The advantages in the new system are the following:

- the user is not directly involved in the activation process
- no data and codes have to be copied and typed
- data connectivity is not required and the system works even if the user has no telephone credit
- the OOB channel is transverse and full-duplex
- provisioning is fully automatic
- provisioning is not only of the mobile app (in which the user, in the previous case, copied the activation code), but also of the PC, i.e. can concern all the systems involved.

It should be noted that the OOB channel, in the example, is obtained via a Bluetooth link but can in turn be obtained between the PC and the smartphone through acoustic transfer in the free space by using the speaker and microphone of the phone and PC. In this, the communication between the smartphone and the PC creates a half or full-duplex local audio system and the actual bitrate, even if lower, is still sufficient to perform the above. In addition, communication between the PC and the smartphone can take place according to other modes and combinations of modes described in the present method.

From what shown in the diagram above it is also clear that, the OOB channel being full-duplex, what depicted by the numeral references 63 and 64 in figure 6 allows the activation of a security handshaking much more complex and articulated than that instead normally takes place today (typically on IP channel, via TCP/IP and SSL/TLS protocol).

As mentioned, a minimum starting condition is that a secure communication channel (security handshaking) can be created during the provisioning.

To allow this to happen, a pre-shared code must be delivered a priori so that the two endpoints (mobile application and server, in the example, but may also be different ones such as the PC itself) can secure the communication channel.

This handshaking involves an exchange of several packages in different directions (in the example, between mobile app and server and vice versa as well as between PC and server and vice versa) and, therefore, can not be done on communicating means unidirectional and even limited. Typically, once the pre-shared secret has been reconstructed from one or more OOB channels, the security handshaking is performed via the IP channel. In other words, since the current OOB channels are typically unidirectional and restricted to the exchange of small codes due to the user's involvement in the security process, the security handshaking step uses the OOB channels only for exchanging a pre-shared secret while the real handshaking actually takes place via the IP channel.

That being said, it is clear that the OOB channel 63-64 being bidirectional (whether half or full-duplex) it can be used to create a new secure multichannel handshaking mechanism that operates in parallel both on the OOB channel created by means of the present method, and on the classic IP one (LAN, WAN, MAN nets, Internet).

In this way, the advantages of the packet communication network (IP network in the example under examination) are combined with that of circuit-switched communication (GSM), which is more secure than any IP network (breaking into the GSM network, even by resorting to the vulnerabilities of SS7 protocol, is much more complex and articulated with respect to an IP network).

The procedure for creating a multi-channel security handshaking can be extended and articulated as required. It is fundamental to consider that the type of bidirectional OOB channel used is able to carry large arbitrary numerical sequences in parallel with the existing channels, typically IP, in order to carry out newly designed multi-channel OOB security handshaking procedures. Thanks to the present method and the above mentioned characteristics of the OOB channel, these procedures can transmit part of the cryptographic material, keys and certificates used for the security handshaking through one channel and part through the other channel, dramatically increasing the security level of the communication session. We are not going into the possible implementations herein. A simple example is the possibility to transmit the nonce (number at once) of the secure handshaking procedure of the SSL/TLS protocol partly on the OOB channel (for example, from the server to the remote endpoint) and partly on the IP channel (from the remote endpoint, one or more of them, to the server) or to transmit the parameters required for the Diffie-Hellman algorithm partly on the OOB channel and partly on the IP channel and so on. These are examples and the method does not vary with respect to possible implementations of various existing and future protocols.

As regard to the issue of exchanging keys, certificates and pre-shared secrets, it should be noted that one of the crucial elements of all security systems that provide access to a local or remote system rather than access to protected data (files, disks) or secure real-time communications (voice and video) is the key generation, exchange, renewal and revocation. Keys, certificates, and/or pre-shared secrets in turn allowing, for example, the identification of the remote endpoint, the decryption of a file, or the setting up of a secure real-time connection, reliably.

All known and less known protocols use various methods to create and exchange keys. This is done in SSL/TLS as in all other protocols. In all cases a crucial element, a pivotal point is the verification of the integrity and authenticity of the keys used as well as the messages received, and this can happen in two ways:

> by relying on a pre-shared secret (typically a both symmetric and asymmetric cryptographic key)
> by relying on a third authority (typically a Certification Authority) that validates a certificate typically containing a public key and presented by one party to the other.

In the first case, a series of security scenarios and exploits (vulnerabilities) become possible, in the second case others are possible. Without examining in depth, as this is not the object of the present method, the essential point is that it is necessary to verify both that a given message (general, sent by any communicating means, as well as possibly used in a handshaking security procedure), data package, file, etc. was actually received by the person who claims to be the legitimate owner and that it has not been modified in the meantime. To do this, the content of the message and a fingerprint (digest) and/or signature thereof (which is, as people in the industry know, the MAC, Message Authentication Code) must be compared with a similar fingerprint/signature generated at the receiver of the message itself. This acknowledge factor can be generated from a local data (pre-shared secret) either available at the receiver, where the receiver is already sure of its authenticity and validity, or generated in real time (usually starting from the cryptographic material of the secure handshaking procedure or based on the public key presented as such by the counterparty) and verified by resorting to a different super-partes entity.

Also in this case. with the new method new methodologies can be enabled for exchanging keys by resorting to various types of available OOB channels.

Consider, for example, two people who want to send a file to each other, for example.

Often, in this context, the file must be obligatorily encrypted by any program and the password must be communicated in some way to the other party, thus creating, de facto, the OOB channel in a more or less extemporary manner and, above all, manually. Because people are not very sensitive to these issues, passwords are communicated via email, SMS, voice, phone, Skype and so on. Furthermore, if dealing with a file, the password must also be stored for future use (and, in this case, the habits and sensitivity of each one set in and Excel or Word files with lists of passwords proliferate, as well as notes on the desktop or post-its attached to the monitor and other habits questionable from the security point of view).

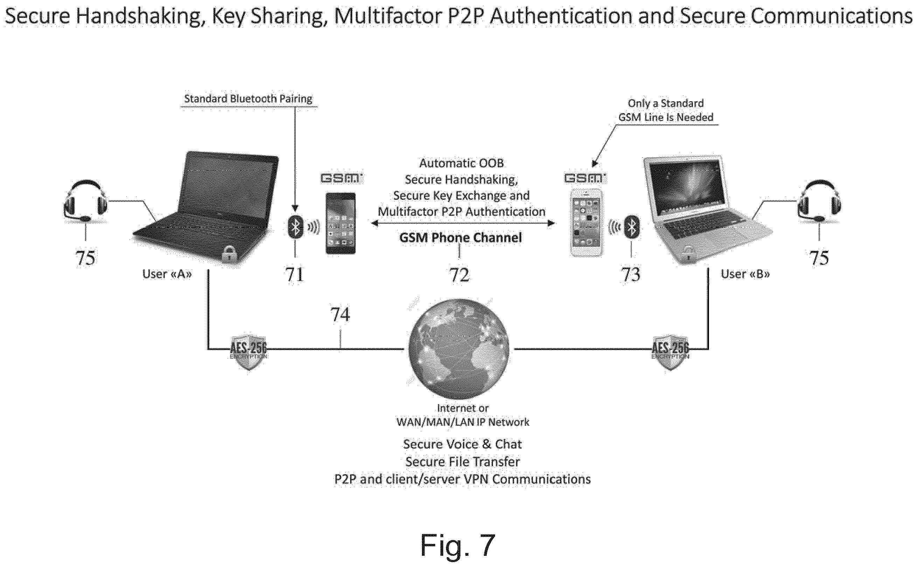

On the other hand, a software application for PC and/or smartphones which uses the method described with particular reference to figures 6 and 7 can help very much in this context and easily allow both end users and companies, as well as large organizations, to securely and easily manage these operations on which all the other ones are based, i.e. operations ranging from the creation of secure real-time communication sessions (e.g., sessions of VoIP communication or videoconferencing or even of VPN type, Virtual Private Network) to the exchange of files and protected data.

In the context of key exchange, this can be done with the same technique depicted in figure 6, as better shown in Figure 7 where the two users ("A" and "B" in the figure) can set up a secure connection (through multi-channel security handshaking, previously described) thanks to the OOB channel 71-72 of the user "A" and the OOB channel 72-73 of the user "B" and, last but not least, thanks to the IP connection 74 via geographical data network. Given the nature of the OOB channel that is being set up, pivoted on GSM circuit-switched network, for the reasons given above, the two users are able to securely identify themselves because the cryptographic data, keys, certificates and anything else necessary to set up the secure communication session are sent from one to the other not only through the packet-switched IP network. In addition, as the OOB channel is a standard voice channel, both users can also identify themselves by voice, talking through the speaker and microphone of the PC or, as in the example below, through the headphones 75. This is a further strengthening element that, for example, can be further enriched by displaying, on both PCs of the two users, an OTP code that they can easily compare through the active voice channel: the correspondence of the code, derived downstream of the multi-channel security handshaking, implies the absence of MITM along the communication channel itself, in this case the IP one. The above to highlight a further possible software representation of the method, which can be limited to key exchange or include all services deriving from these and which can be implemented as described above or in other ways. Therefore, the method is not limited to these possible representations that, by contrast, are just a few examples of possible applications that can be achieved by using the method itself.

The above only relates to some of the possible processes where the method can be used (provisioning, key exchange, etc.), but it can also be used in other processes. It also points out that a bidirectional OOB channel simultaneous or asynchronous with the IP channel makes it possible to create extremely secure handshaking systems that are not currently available on the market. In addition to handshaking and provisioning procedures, as well as procedures for exchanging keys, certificates and pre-shared secrets, the method can also be used to create authorizing signature systems, remote digital signature systems of various types and kinds, advanced electronic signatures as well as secure systems for transceiving data and information even in real time, both single- and multi-channel, depending on the case.

Therefore, if the method is characterized by these basic points, it is, per se, a remarkable innovation both in case of hardware and software representations.

Through the method itself multiple software representations can be implemented.

The method, by creating a new OOB channel (via various channels and media and both uni- and bidirectional) allows at least:

- new single- and multi-channel provisioning processes both in real time and asynchronous
- new single- and multi-channel handshaking processes both in real time and asynchronous
- new one- and multi-factor strong authentication processes
- new one- or multi-factor processes for the identification, authorization and access to protected resources
- new signature processes (to sign general data or, for example, bank transactions) and remote and/or certified digital signature processes and advanced electronic signature processes
- new processes for exchanging keys, certificates and pre-shared secrets
- new decommissioning, reactivation, locking/unlocking processes, etc.
- other processes of communication and secure exchange of data, messages and information.

In view of the above, it can be stated that the method (and the related device) is suitable for transceiving arbitrary numerical sequences on communication channels and communicating means with limited bandwidth.

The method is suitable for secure communication systems, for one- or multi-factor authentication, for the access to data and systems and authorization (of operations, e.g. a banking order), for advanced digital and electronic signature, for the secure exchange of cryptographic keys and certificates.

Where it is understood that:

a) the concept of "provisioning" is considered as falling within the secure communication channel (which is OOB as well, although not indicated in the title for brevity) and in the secure exchange of cryptographic keys (where pre-shared secrets are omitted for brevity)

b) the concept of identification is considered included in that of one- or multi-factor authentication and, more generally, not related to the method disclosed herein as it is dedicated to the specific application which, once the user has been identified, starts the provisioning procedure of the computer device also resorting the aforementioned method

c) "access and authorization" and "signature" are applications of one- or multi-factor identification and authentication procedures.

d) "operation authorization" includes any activity, including payments via mobile app for smartphones and via the web channel.

e) "secure communication systems" means everything ranging from the above-described OOB handshaking to real-time and asynchronous secure communication of data, voice and video. In other words, the new method can only be used for the OOB handshaking and, then, the communication can take place on traditional channels (IP) or, also, it can be used for the communication step after securing the channel (recognition and key exchange/generation).

Therefore, the method makes it possible to implement the new processes mentioned above and addressed to the creation of secure communication channels, the implementation and management of one- or multi-factor identification and/or strong authentication systems, payment systems (via smartphone or PC), digital signature (still via smartphone or PC), key and certificates exchange and secure systems for real time and asynchronous communication of data and information.

The method of the invention, as mentioned, does not concern the identification per se but can also concern the identification if it is provided within a secure identification device valid as identification document "issued on paper, magnetic or IT support, by an Italian Public Administration or by other States " (art. 1 lett. c D.P.R. 445/2000).

More specifically the document, in addition to being issued by a State Administration and bearing a photograph of the subject together with the relative personal data, must have a unique identifier and have suitable anti-counterfeiting systems.

In this regard, the method included in the document as a hardware representation, can allow the unique identification of the holder, possibly also considering the use of an additional PIN, if the appropriate security systems are available to manage the digital data and personal security credentials contained in the document and, if necessary, to exchange them and/or transmit them to remote authentication systems through one or more channels among those provided by the method itself. Among these, the audio/voice channel is certainly the most well known and is available in several computer devices such as computers, notebooks, tablets and smartphones as well as in all types of phones on the market.

It should be noted that this object can also be achieved through a software representation (of the Soft Token type) where, since during provisioning, the secure application can allow a user to be identified on a website or a portal of a bank or government agency, through the microphone of the PC as well as through a dedicated application. The mechanism is similar to what already reported in the example of the provisioning procedure by telephone call via Bluetooth. The user is on a site and must identify himself or herself. Instead of copying an OTP code from an application during the provisioning, he simply brings the phone closer to the PC and, if required, presses a key. Authentication data, transmitted by phone, are automatically acquired by the server through the active web session by using one or more OOB communication channels, in addition to the one already implemented and among those provided by the method, typically an SSL/TLS one on IP transport.

Furthermore, still in relation to the previous example, if the authentication to the site is done directly through the mobile app and, therefore, even without copying any OTP code in the login screen in the computer, by using one or more OOB communication channels among those provided by the method, the mobile app and the server can activate additional secure communication sessions and directly exchange one- or multi-factor authentication data through the computer used to connect to the site and/or portal. It should be noted that, in this way, access data are not transmitted over the network (local or Internet) directly from the smartphone but processed by the latter and communicated to the computer and thus to the server through at least one OOB channel confined to the space immediately adjacent to the computer devices in use. This further increases the overall security level. In addition, by using the same method, the application provisioning is in turn strengthened in terms of security and, at the same time, simplified for the user who is not actively involved in the provisioning procedure as is the case with solutions known in art.

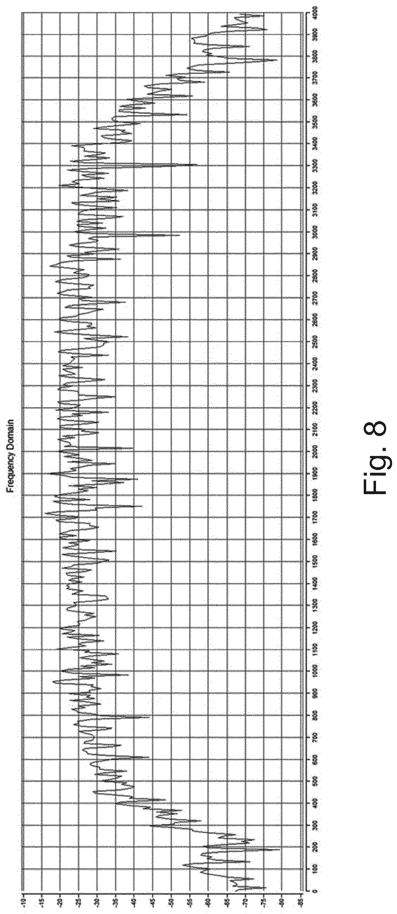

Figure 8 is a representation of limited bandwidth according to an aspect of the invention.

The signal shown is centered in a band between 400 and 3,600 Hz, i.e. the limited frequency bandwidth is within a range of 3,200 Hz.

According to other embodiments of the invention, this band can also be centered with reference to other frequency values, for example at 50 kHz or even at 1 GHz.

More generally, in the method of the invention, the limited frequency bandwidth is in a frequency range up to 10 kHz.

According to a preferred embodiment, the limited frequency bandwidth is in a frequency range up to 5 kHz.

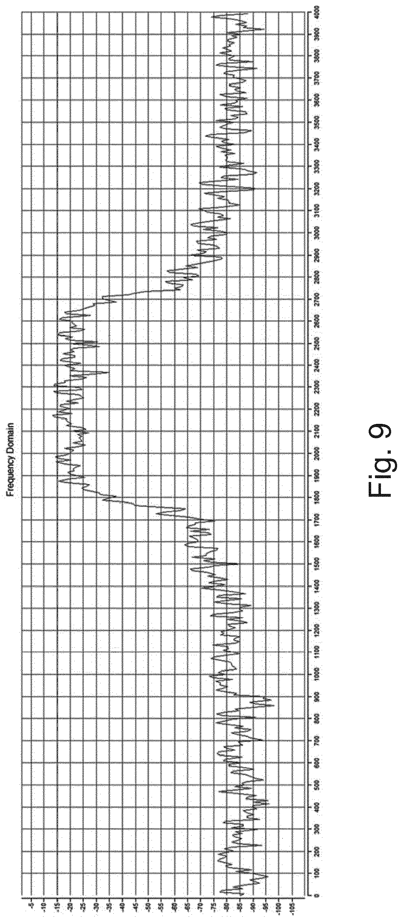

Figure 9 shows, by way of example, another possible example of the signal generated by the present method so that the frequency amplitude is reduced to 900 Hz, in the range between 1,800 and 2,700 Hz. Other frequency ranges are possible within communicating means and/or channels with limited bandwidth.

The invention described is not limited to the examples illustrated so far, but also extends to a further multiplicity of both hardware and software applications and representations.

In the field of software representation, the invention also extends to the following applications:

• secure login to the PC and secure all-channel access to company portals, websites, Intranet services, services provided in SaaS, Cloud and client/server mode

• secure access to and management of domotics and IoT systems, automotive systems, on-board HMI (Human Machine Interface) equipment, etc.

• secure exchange of keys, certificates and pre-shared secrets between two and/or more users with and without the intervention of back-end server systems

• secure sending of emails and email attachments

• secure sending of files, messages and secure communications in general

• secure access to files, data, messages, disks and information

• omnichannel transaction and payment management (app-to-app and app-to-web) compliant with PSD2 standard

• omnichannel digital electronic signature systems also for remote and/or advanced signature

via mobile app and/or web-based systems (app-to-app and app-to-web)

In the field of software representation, in addition to the above-listed applications, the invention also extends to the following applications:

• conditional access systems, also for a fee: company turnstiles, underground turnstiles, systems to access public and private areas, issuing and management of tickets and on-board tickets of transport means, car park exit gates, toll collection stations, etc.

• omnichannel payment systems through apps: automatic car park payment machines, electric-car charging stations, electricity and other raw-material meters, wireless charging stations for smartphones, computers and other computer and/or hardware devices, etc.

• secure access to online platforms (websites, web banking, SaaS platforms and cloud services, government sites and citizen services) with OOB identification via analog, digital (VoIP and audio/video), acoustic, electromagnetic and optical audio channels.

• secure access to and management of domotics and IoT systems, automotive systems, on-board HMI (Human Machine Interface) equipment, etc.

• systems of secure communication of data and/or information, voice and/or video for smartphones, laptops and back-end servers

• omnichannel transaction and payment management compliant with PSD2 standard

• omnichannel digital electronic signature systems also for remote and/or advanced signature.

Various modifications may be made to the embodiments depicted herein by way of example without departing from the scope of the present invention as defined by the enclosed claims.

## Claims

1. Method for implementing and managing secure communications, comprising the steps of:

   a) providing at least one first communicating means having transceiving functions for analog and/or digital signals;
   b) providing a programmable computer device having transceiving functions for analog and/or digital signals;
   c) setting up a first communication channel, via said first communicating means, between said programmable computer device and a similar device designed to receive transmissions coming from said programmable computer device; and
   d) exchanging arbitrary numerical sequences, in the form of analog and/or digital signals, between said first communicating means and said programmable computer devices via said first communication channel, where said first communication channel between said first communicating means and said programmable computer device has limited frequency bandwidth, and in that said analog and/or digital signals are modulated to be carried via said first communication channel, wherein:
   e) information, data and/or commands are exchanged via said first communication channel between said programmable computer devices and said first communicating means in order to manage secure communication processes comprising one or more among handshaking processes for the creation of secure channels, processes to deliver keys, certificates, cryptographic material and pre-shared secrets in general, provisioning processes of applications and devices, one- or multi-factor authentication and/or authorization processes, local and remote access processes to access computer systems, contract signing processes through advanced electronic signature and digital and/or qualified electronic signature also remotely, transactions and payments also compliant with the standard PSD2 and secure transmitting and receiving processes to transmit and receive messages, data, information, commands and notifications, and wherein:
   f) said first communication channel transmits and/or receives the aforesaid modulated signals, so that they can be carried via digital and/or analog audio communicating means, where said modulation comprises mapping the single bits of the arbitrary numerical sequence in order to produce an elementary baseband signal, said elementary baseband signal being subsequently processed through signal analog processing and/or digital processing techniques and centered in the frequency range most suitable for the communicating means, **characterized in that** the limited frequency bandwidth is generated in such a manner capable to be carried within an analogue and/or digital pre-existing communication channel, including a pre-existing video communication channels and voice channel even compressed with a vocoder, and/or a physical medium.

2. Method according to claim 1, in which said first communication channel simultaneously or not simultaneously transmits and/or receives, both in half-duplex and full-duplex mode, both synchronously and asynchronously and both operating on a single frequency range and on different frequencies, the signals modulated such that they can be carried via communicating means based on resonant and non-resonant magnetic induction, resonant and non-resonant electrical displacement, electro-mechanical vibrations and optical communicating means based on the propagation of visible and invisible light waves and/or radiation.

3. Method according to claim 1, further comprising the steps of:

   e) providing at least one second communicating means having transceiving functions for analog and/or digital signals;
   f) setting up at least one second communication channel between said first communicating means and said second communicating means;
   g) exchanging arbitrary numerical sequences between said first communicating means and/or said second communicating means also via the second communication channel with said programmable computer device and at least another programmable computer device in order to manage secure communication processes comprising one or more among handshaking processes for the creation of secure channels, processes to deliver keys, certificates, cryptographic material and pre-shared secrets in general, provisioning processes of applications and devices, one- or multi-factor authentication processes, local and remote access processes to access computer systems, contract signing processes through advanced electronic signature and digital and/or qualified electronic signature also remotely, transactions and payments also compliant with the standard PSD2 and secure transmitting and receiving processes to transmit and receive messages, data, information, commands and notifications.

4. Method according to any one of claims 1 to 3, wherein said second communication channel is of a type different from said first communication channel.

5. Programmable computer device for transceiving arbitrary numerical sequences in the form of analog and/or digital signals as per the method according to any one of claims 1 to 4, comprising a power supply unit, a programmable control unit programmed to carry out the method according to any of the claims 1 to 4, cryptographic means to guarantee the security of information contained in the device and/or received and/or transmitted by the latter and at least one transducer for the exchange of analog and/or digital signals with at least one external device, **characterized in that** said programmable control unit is programmed to process analog and/or digital modulated signals with a limited frequency bandwidth generated in such a manner capable to be carried within an analogue and/or digital pre-existing communication channel, including a pre-existing video communication channels and voice channel even compressed with a vocoder, and/or a physical medium.

6. Device according to claim 5, wherein the limited frequency bandwidth for which the programmable control unit is programmed for operating is comprised within a range up to 10 kHz.

7. Device according to claim 5, further comprising user interface means.

8. Device according to claim 5, further comprising communicating means to communicate with further external devices via at least one channel different from the one having limited bandwidth on which said analog and/or digital signals are carried.

9. Device according to claim 5, wherein said power supply unit includes means for energy harvesting from external sources.

10. Device according to claim 5, wherein said transducer consists of a radiating body and/or an antenna, a capacitive or inductive element and/or an electromechanical and/or acoustic and/or optical transducer, i.e. to transduce visible and invisible light waves and/or radiation.

11. Computer program product comprising a data medium in which executable code lines, which are realized in machine readable form, are stored for carrying out a method according to claims 1 to 4.

12. Use of a programmable computer device according to one of claims 5 to 11 and/or a program product according to claim 11 for transceiving information and data configured to implement one- or multi-factor identification and/or authentication systems and processes, handshaking systems and processes for the activation and/or the creation of secure channels, systems and processes to deliver keys, certificates, cryptographic material and pre-shared secrets in general, provisioning systems and processes of applications and devices, local and remote access systems and processes to access computer systems, contract signing systems and processes through advanced electronic signature and digital and/or qualified electronic signature also remotely, transactions and payments also compliant with the standard PSD2, secure transmitting and receiving systems and processes to transmit and receive messages, data, information, commands and notifications which are transmitted and/or received on at least one communication channel operating with limited bandwidth generated in such a manner capable to be carried within an analogue and/or digital pre-existing communication channel, including a pre-existing video communication channels and voice channel even compressed with a vocoder, and/or a physical medium.

**Patentansprüche**

1. Verfahren zum Implementieren und Verwalten sicherer Kommunikationen, umfassend die Schritte:

   a) Bereitstellen mindestens eines ersten Kommunikationsmittels mit Sende-/Empfangsfunktionen für analoge und/oder digitale Signale;
   b) Bereitstellen eines programmierbaren Computergeräts mit Sende-/Empfangsfunktionen für analoge und/oder digitale Signale;
   c) Einrichten eines ersten Kommunikationskanals über das erste Kommunikationsmittel zwischen dem programmierbaren Computergerät und einem ähnlichen Gerät, das dazu bestimmt ist, Übertragungen zu empfangen, die von dem programmierbaren Computergerät kommen; und
   d) Austauschen beliebiger Zahlenfolgen in der Form von analogen und/oder digitalen Signalen zwischen dem ersten Kommunikationsmittel und den programmierbaren Computergeräten über den ersten Kommunikationskanal, wobei der erste Kommunikationskanal zwischen dem ersten Kommunikationsmittel und dem programmierbaren Computergerät begrenzte Frequenzbandbreite hat, und die analogen und/oder digitalen Signale moduliert werden, um über den ersten Kommunikationskanal übertragen zu werden, wobei:
   e) Informationen, Daten und/oder Befehle über den ersten Kommunikationskanal zwischen den programmierbaren Computergeräten und dem ersten Kommunikationsmittel ausgetauscht werden, um sichere Kommunikationsprozesse zu verwalten, umfassend eines oder mehreres, ausgewählt aus Handshake-Prozesse zur Erzeugung sicherer Kanäle, Prozesse zur Lieferung von Schlüsseln, Zertifikaten, kryptografischem Material und vorgeteilten Geheimnissen im Allgemeinen, Bereitstellungsprozesse von Anwendungen und Geräten, Ein- oder Mehrfaktor-Authentifizierungs- und/oder Autorisierungsprozesse, lokale und Fernzugriffsprozesse für den Zugriff auf Computersysteme, Vertragsunterzeichnungsprozesse durch fortschrittliche elektronische Signatur und digitale und/oder qualifizierte elektronische Signatur auch aus der Ferne, Transaktionen und Zahlungen auch gemäß dem Standard PSD2 und sichere Sende- und Empfangsprozesse zum Senden und Empfangen von Nachrichten, Daten, Informationen, Befehlen und Benachrichtigungen, und wobei:

f) der erste Kommunikationskanal die oben genannten modulierten Signale sendet und/oder empfängt, so dass sie über digitale und/oder analoge Audiokommunikationsmittel übertragen werden können, wobei die Modulation das Mapping der einzelnen Bits der beliebigen Zahlenfolgen umfasst, um ein elementares Basisbandsignal zu erzeugen, wobei das elementare Basisbandsignal anschließend durch analoge Signalverarbeitungs- und/oder digitale Verarbeitungstechniken verarbeitet und in dem für die Kommunikationsmittel am besten geeigneten Frequenzbereich zentriert wird, **dadurch gekennzeichnet, dass** die begrenzte Frequenzbandbreite auf eine solche Wiese generiert wird, dass sie dazu in der Lage ist, innerhalb eines analogen und/oder digitalen vorexistierenden Kommunikationskanals, einschließlich vorexistierender Videokommunikationskanäle und Sprachkanal, selbst komprimiert mit einem Vocoder, und/oder einem physikalischen Medium übertragen zu werden.

2. Verfahren nach Anspruch 1, bei dem der erste Kommunikationskanal gleichzeitig oder nicht gleichzeitig sowohl im Halbduplex- als auch im Vollduplex-Modus sowohl synchron als auch asynchron sendet und/oder empfängt und beide auf einem einzigen Frequenzbereich und auf unterschiedlichen Frequenzen arbeiten, wobei die Signale so moduliert werden, dass sie über Kommunikationsmittel übertragen werden können, die auf resonanter und nicht resonanter magnetischer Induktion, resonanter und nicht resonanter elektrischer Verschiebung, elektromechanischen Schwingungen und optischen Kommunikationsmitteln, basierend auf der Ausbreitung von sichtbaren und unsichtbaren Lichtwellen und/ oder Strahlung, basieren.

3. Verfahren nach Anspruch 1, ferner umfassend die Schritte:

e) Bereitstellen mindestens eines zweiten Kommunikationsmittels mit Sende-/Empfangsfunktionen für analoge und/oder digitale Signale;
f) Einrichten mindestens eines zweiten Kommunikationskanals zwischen dem ersten Kommunikationsmittel und dem zweiten Kommunikationsmittel;
g) Austauschen beliebiger Zahlenfolgen zwischen dem ersten Kommunikationsmittel und/oder dem zweiten Kommunikationsmittel auch über den zweiten Kommunikationskanal mit dem programmierbaren Computergerät und mindestens einem anderen programmierbaren Computergerät, um sichere Kommunikationsprozesse zu verwalten, umfassend eines oder mehreres, ausgewählt aus Handshake-Prozesse zur Erzeugung sicherer Kanäle, Prozesse zur Lieferung von Schlüsseln, Zertifikaten, kryptografischem Material und vorgeteilten Geheimnissen im Allgemeinen, Bereitstellungsprozesse von Anwendungen und Geräten, Ein- oder Mehrfaktor-Authentifizierungsprozesse, lokale und Fernzugriffsprozesse für den Zugriff auf Computersysteme, Vertragsunterzeichnungsprozesse durch fortgeschrittene elektronische Signatur und digitale und/oder qualifizierte elektronische Signatur auch aus der Ferne, Transaktionen und Zahlungen auch gemäß dem Standard PSD2 und sichere Sende- und Empfangsprozesse zum Senden und Empfangen von Nachrichten, Daten, Informationen, Befehlen und Benachrichtigungen.

4. Verfahren nach einem der Ansprüche 1 bis 3, wobei der zweite Kommunikationskanal von einem anderen Typ als der erste Kommunikationskanal ist.

5. Programmierbares Computergerät zum Empfangen beliebiger Zahlenfolgen in der Form von analogen und/oder digitalen Signalen wie mit der Methode gemäß einem der Ansprüche 1 bis 4, umfassend ein Netzteil, eine programmierbare Steuereinheit, die programmiert ist, um das Verfahren gemäß einem der Ansprüche 1 bis 4 auszuführen, kryptographische Mittel zur Gewährleistung der Sicherheit der im Gerät enthaltenen und/oder durch letzteres empfangenen und/oder gesendeten Informationen und mindestens einen Wandler zum Austauschen analoger und/oder digitaler Signale mit mindestens einem externen Gerät, **dadurch gekennzeichnet, dass** die programmierbare Steuereinheit dazu programmiert ist, analoge und/oder digital modulierte Signale mit einer begrenzten Frequenzbandbreite zu verarbeiten, die auf eines solche Weise generiert sind, dass sie dazu in der Lage sind, innerhalb eines analogen und/oder digitalen vorexistierenden Kommunikationskanals, einschließlich vorexistierender Videokommunikationskanäle und Sprachkanal, selbst komprimiert mit einem Vocoder, und/oder einem physikalischen Medium übertragen zu werden.

6. Gerät nach Anspruch 5, wobei die begrenzte Frequenzbandbreite, für die die programmierbare Steuereinheit zum Betrieb programmiert ist, in einem Bereich von bis zu 10 kHz liegt.

7. Gerät nach Anspruch 5, ferner umfassend Benutzerschnittstellenmittel.

8. Gerät nach Anspruch 5, ferner umfassend Kommunikationsmittel zum Kommunizieren mit weiteren externen Geräten über mindestens einen anderen Kanal als demjenigen mit begrenzter Bandbreite, auf dem die analogen und/oder digitalen Signale übertragen werden.

9. Gerät nach Anspruch 5, wobei die Stromversorgungseinheit Mittel zur Energiegewinnung aus externen Quellen umfasst.

10. Gerät nach Anspruch 5, wobei der Wandler aus einem strahlenden Körper und/oder einer Antenne, einem kapazitiven oder induktiven Element und/oder einem elektromechanischen und/oder akustischen und/oder optischen Wandler, d.h. um sichtbare und unsichtbare Lichtwellen und/oder Strahlung zu wandeln, besteht.

11. Computerprogrammprodukt, umfassend einen Datenträger, in dem ausführbare Codezeilen gespeichert sind, die in maschinenlesbarer Form realisiert sind, zur Durchführung eines Verfahrens nach den Ansprüchen 1 bis 4.

12. Verwendung eines programmierbaren Computergerätes nach einem der Ansprüche 5 bis 11 und/oder eines Programmprodukts nach Anspruch 11 zur Übertragung von Informationen und Daten, geeignet zur Implementierung von Ein- oder Mehrfaktor-Identifikations- und/oder Authentifizierungssystemen und

- prozessen, Handshake-Systemen und Prozessen zur Aktivierung und/oder Erzeugung sicherer Kanäle, Systemen und Prozessen zur Lieferung von Schlüsseln, Zertifikaten, kryptografischem Material und vorgeteilten Geheimnissen im Allgemeinen, Bereitstellungssystemen und Prozessen von Anwendungen und Geräten, lokalen und Fernzugriffssystemen und Prozessen für den Zugriff auf Computersysteme, Vertragsunterzeichnungssystemen und - prozessen durch fortgeschrittene elektronische Signatur und digitale und/oder qualifizierte elektronische Signatur auch aus der Ferne, Transaktionen und Zahlungen auch gemäß dem Standard PSD2, sicheren Sende- und Empfangssystemen und -prozessen zum Senden und Empfangen von Nachrichten, Daten, Informationen, Befehle und Benachrichtigungen, die auf mindestens einem Kommunikationskanal gesendet und/oder empfangen werden, der mit begrenzter Bandbreite in einem Frequenzbereich arbeitet, die auf eine solche Weise generiert werden, dass sie dazu in der Lage sind, innerhalb eines analogen und/oder digitalen vorexistierenden Kommunikationskanals, einschließlich vorexistierender Videokommunikationskanäle und Sprachkanal, selbst komprimiert mit einem Vocoder, und/oder einem physikalischen Medium übertragen zu werden.

## Revendications

1. Procédé d'implémentation et de gestion de communications sécurisées, comprenant les étapes consistant à :

a) fournir au moins un premier moyen de communication ayant des fonctions d'émission-réception pour des signaux analogiques et/ou numériques ;
b) fournir un dispositif informatique programmable ayant des fonctions d'émission-réception pour des signaux analogiques et/ou numériques ;
c) établir un premier canal de communication, via ledit premier moyen de communication, entre ledit dispositif informatique programmable et un dispositif similaire conçu pour recevoir des transmissions provenant dudit dispositif informatique programmable ; et
d) échanger des séquences numériques arbitraires, sous la forme de signaux analogiques et/ou numériques, entre lesdits premiers moyens de communication et lesdits dispositifs informatiques programmables via ledit premier canal de communication, où ledit premier canal de communication entre lesdits premiers moyens de communication et ledit dispositif informatique programmable a une bande passante de fréquence limitée, et en ce que lesdits signaux analogiques et/ou numériques sont modulés pour être transportés via ledit premier canal de communication, dans lequel :
e) échanger des informations, des données et/ou des commandes via ledit premier canal de communication entre lesdits dispositifs informatiques programmables et ledit premier moyen de communication afin de gérer des processus de communication sécurisés comprenant un ou plusieurs processus parmi des processus d'établissement de liaison pour la création de canaux sécurisés, des processus pour délivrer des clés, des certificats, du matériel cryptographique et des secrets pré-partagés en général, des processus d'approvisionnement d'applications et de dispositifs, des processus d'authentification et/ou d'autorisation à un ou plusieurs facteurs, des processus d'accès local et à distance pour accéder à des systèmes informatiques, des processus de signature de contrats au moyen d'une signature électronique avancée et d'une signature électronique numérique et/ou qualifiée également à distance, des transactions et des paiements également conformes à la norme PSD2 et des processus de transmission et de réception sécurisés pour transmettre et recevoir des messages, des données, des informations, des commandes et des notifications, et dans lequel :

f) ledit premier canal de communication transmet et/ou reçoit les signaux modulés susmentionnés, de sorte qu'ils peuvent être transportés par des moyens de communication audio numériques et/ou analogiques, où ladite modulation comprend le mappage des bits uniques de la séquence numérique arbitraire afin de produire un signal de bande de base élémentaire, ledit signal de bande de base élémentaire étant ensuite traité par des techniques de traitement analogique et/ou numérique de signal et centré dans la gamme de fréquences la plus appropriée pour les moyens de communication, **caractérisé en ce que** la bande passante de fréquence limitée est générée de manière à pouvoir être transportée dans un canal de communication analogique et/ou numérique préexistant, y compris un canal de communication vidéo préexistant et un canal vocal même compressé avec un vocodeur, et/ou un support physique.

2. Procédé selon la revendication 1, dans lequel ledit premier canal de communication émet et/ou reçoit simultanément ou non simultanément, à la fois en mode semi-duplex et duplex intégral, à la fois de manière synchrone et asynchrone et à la fois en opérant sur une seule gamme de fréquences et sur des fréquences différentes, les signaux modulés de telle sorte qu'ils puissent être transportés via des moyens de communication basés sur l'induction magnétique résonante et non résonante, le déplacement électrique résonant et non résonant, les vibrations électromécaniques et des moyens de communication optiques basés sur la propagation des ondes et/ou des rayonnements lumineux visibles et invisibles.

3. Procédé selon la revendication 1, comprenant en outre les étapes consistant à :

e) fournir au moins un second moyen de communication ayant des fonctions d'émission-réception pour des signaux analogiques et/ou numériques ;
f) établir au moins un second canal de communication entre ledit premier moyen de communication et ledit second moyen de communication ;
g) échanger des séquences numériques arbitraires entre ledit premier moyen de communication et/ou ledit second moyen de communication également via le second canal de communication avec ledit dispositif informatique programmable et au moins un autre dispositif informatique programmable afin de gérer des processus de communication sécurisés comprenant un ou plusieurs processus parmi des processus d'établissement de liaison pour la création de canaux sécurisés, des processus pour délivrer des clés, des certificats, du matériel cryptographique et des secrets pré-partagés en général, des processus d'approvisionnement d'applications et de dispositifs, des processus d'authentification à un ou plusieurs facteurs, des processus d'accès local et à distance pour accéder à des systèmes informatiques, des processus de signature de contrats au moyen de la signature électronique avancée et de la signature électronique numérique et/ou qualifiée également à distance, des transactions et des paiements également conformes à la norme PSD2 et des processus de transmission et de réception sécurisés pour transmettre et recevoir des messages, des données, des informations, des commandes et des notifications.

4. Procédé selon l'une quelconque des revendications 1 à 3, dans lequel ledit second canal de communication est d'un type différent dudit premier canal de communication.

5. Dispositif informatique programmable pour émettre des séquences numériques arbitraires sous forme de signaux analogiques et/ou numériques selon le procédé selon l'une quelconque des revendications 1 à 4, comprenant une unité d'alimentation, une unité de commande programmable programmée pour mettre en œuvre le procédé selon l'une quelconque des revendications 1 à 4, des moyens cryptographiques pour garantir la sécurité des informations contenues dans le dispositif et/ou reçues et/ou émises par ce dernier et au moins un transducteur pour l'échange de signaux analogiques et/ou numériques avec au moins un dispositif externe, **caractérisé en ce que** ladite unité de commande programmable est programmée pour traiter des signaux modulés analogiques et/ou numériques avec une bande passante de fréquence limitée générés de manière à pouvoir être transportés dans un canal de communication analogique et/ou numérique préexistant, y compris un canal de communication vidéo préexistant et un canal vocal même compressé avec un vocodeur, et/ou un support physique.

6. Dispositif selon la revendication 5, dans lequel la bande passante de fréquence limitée pour laquelle l'unité de commande programmable est programmée pour fonctionner est comprise dans une plage allant jusqu'à 10 kHz.

7. Dispositif selon la revendication 5, comprenant en outre des moyens d'interface utilisateur.

8. Dispositif selon la revendication 5, comprenant en outre des moyens de communication pour communiquer avec d'autres dispositifs externes via au moins un canal différent de celui ayant une bande passante limitée sur lequel lesdits signaux analogiques et/ou numériques sont transportés.

9. Dispositif selon la revendication 5, dans lequel ladite unité d'alimentation électrique comprend des moyens de récolte d'énergie à partir de sources externes.

10. Dispositif selon la revendication 5, dans lequel ledit transducteur consiste en un corps rayonnant et/ou une antenne, un élément capacitif ou inductif et/ou un transducteur électromécanique et/ou acoustique et/ou optique, c'est-à-dire pour transduire des ondes et/ou des rayonnements lumineux visibles et invisibles.

11. Produit de programme informatique comprenant un support de données dans lequel sont stockées des lignes de code exécutables, réalisées sous forme lisible par machine, pour la mise en œuvre d'un procédé selon les revendications 1 à 4.

12. Utilisation d'un dispositif informatique programmable selon l'une des revendications 5 à 11 et/ou d'un produit de programme selon la revendication 11 pour transmettre des informations et des données configurées pour implémenter des systèmes et des processus d'identification et/ou d'authentification à un ou plusieurs facteurs, des systèmes et des processus d'établissement de liaison pour l'activation et/ou la création de canaux sécurisés, des systèmes et des processus pour délivrer des clés, des certificats, du matériel cryptographique et des secrets pré-partagés en général, des systèmes et des processus d'approvisionnement d'applications et de dispositifs, des systèmes et des processus d'accès local et à distance pour accéder à des systèmes informatiques, des systèmes et des processus de signature de contrats au moyen de la signature électronique avancée et de la signature électronique numérique et/ou qualifiée également à distance, des transactions et des paiements également conformes à la norme PSD2, des systèmes et des processus de transmission et de réception sécurisés pour transmettre et recevoir des messages, des données, des informations, des commandes et des notifications qui sont transmis et/ou reçus sur au moins un canal de communication fonctionnant avec une bande passante limitée générée de manière à pouvoir être transportée dans un canal de communication analogique et/ou numérique préexistant, y compris un canal de communication vidéo préexistant et un canal vocal même compressé avec un vocodeur, et/ou un support physique.

Fig. 1

Input Signal 20

24 Downconverter

23 Rx Filter & Processing

32 Time Off-Set Estimation

42 Frequency Offset Management

22 Resampler

21 Demapper

26 DataLink

15 Forward Error Correction

27 MAC

28 Decryption

29 Decompression

Rx Data Stream 10

Fig. 2

Fig. 3

Fig. 4

# Advanced Soft Token Provisioning

**Fig. 5**

# Next Generation Soft Token Provisioning

Fig. 6

# Secure Handshaking, Key Sharing, Multifactor P2P Authentication and Secure Communications

Standard Bluetooth Pairing

Only a Standard
GSM Line Is Needed

Automatic OOB
Secure Handshaking,
Secure Key Exchange and
Multifactor P2P Authentication

**GSM Phone Channel**

75    User «A»    71    72    73    User «B»    75

74

Internet or
WAN/MAN/LAN IP Network

Secure Voice & Chat
Secure File Transfer
P2P and client/server VPN Communications

## Fig. 7

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006053276 A
- US 2016261997 A
- US 2012046025 A
- WO 2016053276 A